(19) Europäisches Patentamt
European Patent Office
Office européen des brevets

(11) EP 4 513 982 A1

(12) EUROPEAN PATENT APPLICATION
published in accordance with Art. 153(4) EPC

(43) Date of publication:
26.02.2025 Bulletin 2025/09

(51) International Patent Classification (IPC):
H04W 52/02 (2009.01)   H04W 76/28 (2018.01)

(21) Application number: 23802681.9

(52) Cooperative Patent Classification (CPC):
H04W 52/02; H04W 76/28

(22) Date of filing: 27.04.2023

(86) International application number:
PCT/CN2023/091337

(87) International publication number:
WO 2023/216909 (16.11.2023 Gazette 2023/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.05.2022   CN 202210504044
12.08.2022   CN 202210970229

(71) Applicant: Huawei Technologies Co., Ltd.
Shenzhen, Guangdong 518129 (CN)

(72) Inventor: LI, Qiang
Shenzhen, Guangdong 518129 (CN)

(74) Representative: Epping - Hermann - Fischer
Patentanwaltsgesellschaft mbH
Schloßschmidstraße 5
80639 München (DE)

(54) DATA PACKET TRANSMISSION METHOD AND APPARATUS

(57) This application discloses a data packet transmission method and an apparatus, and relates to the field of wireless communication. Time units occupied by a first transport channel and a second transport channel may be separately determined, a data packet is sent to a first terminal in the time unit occupied by the first transport channel, and a data packet is sent to a second terminal in the time unit occupied by the second transport channel. The first transport channel and the second transport channel carry data packets, the first transport channel occupies N time units, at least two of the N time units are discontinuous in time domain, the second transport channel occupies M time units, at least two of the M time units are discontinuous in time domain, the N time units do not overlap the M time units, and N and M are natural numbers greater than 1. In this way, a data packet may be sent to a terminal in a plurality of discontinuous time units, to reduce a decoding failure rate of the terminal, and reduce impact of a decoding failure on transmission of service data.

FIG. 7

EP 4 513 982 A1

**Description**

This application claims priorities to Patent Application No. 202210504044.2, filed with the China National Intellectual Property Administration on May 10, 2022 and entitled "SIGNAL SENDING METHOD", and to Patent Application No. 202210970229.2, filed with the China National Intellectual Property Administration on August 12, 2022 and entitled "DATA PACKET TRANSMISSION METHOD AND APPARATUS", both of which are incorporated herein by reference in their entireties.

**TECHNICAL FIELD**

This application relates to the field of wireless communication, and in particular, to a data packet transmission method and an apparatus.

**BACKGROUND**

In a communication system, when a terminal has a service and needs to send and receive data, the terminal operates in a "connected mode (connected mode)". In this case, the terminal may exchange signaling with a network device, to receive and send a data packet. To reduce power consumption of the terminal, when the terminal has no service and does not need to send or receive a data packet, the terminal operates in an "idle mode (idle mode)". In this case, the terminal may enter a sleep state, and periodically wake up, to detect whether there is a data packet sent to the terminal. If there is a data packet, the terminal enters the connected mode; or if there is no data packet, the terminal remains in the idle mode and continues to sleep. For example, when the terminal is in the idle mode, if the network device has a data packet that needs to be sent to the terminal, the network device may send a wake-up signal to the terminal. After waking up, if the terminal receives the wake-up signal sent to the terminal, the terminal enters the connected mode, and performs normal data packet receiving and sending operations; or if the terminal does not receive the wake-up signal sent to the terminal, the terminal continues to sleep. The wake-up signal may be transmitted in a form of a data packet.

Currently, data packets of different terminals are transmitted in a time division multiplexing (time division multiplexing, TDM) manner regardless of transmission of the wake-up signal or normal data packet receiving and sending operations in the connected mode. For example, the network device sends a data packet 1 to a terminal 1 at a moment 1. After the data packet 1 is sent, the network device sends a data packet 2 to a terminal 2 at a moment 2. If a data packet (for example, the data packet 1 or the data packet 2) is small, a time period for transmitting the data packet is short. If a channel is subject to deep fading in the time period for transmitting the data packet, quality of a received signal is poor, decoding of the terminal fails, and transmission of service data is affected.

**SUMMARY**

Embodiments of this application provide a data packet transmission method and an apparatus, to reduce a decoding failure rate of a terminal, and reduce impact of a decoding failure on transmission of service data.

To achieve the foregoing objectives, the following technical solutions are used in embodiments of this application.

According to a first aspect, a data packet transmission method is provided. A communication apparatus that performs the method may be a network device, or may be a module, for example, a chip or a chip system, used in the network device. The following uses an example in which an execution body is the network device for description. The method includes: determining a first time unit occupied by a first transport channel and a first time unit occupied by a second transport channel; sending a data packet to a first terminal in the first time unit occupied by the first transport channel; and sending a data packet to a second terminal in the first time unit occupied by the second transport channel. The first transport channel and the second transport channel carry data packets. The first transport channel occupies N first time units, and at least two of the N first time units are discontinuous in time domain. The second transport channel occupies M first time units, and at least two of the M first time units are discontinuous in time domain. N and M are natural numbers greater than or equal to 2. The N first time units do not overlap the M first time units.

Based on the method provided in the first aspect, the network device may determine N discontinuous first time units corresponding to the first terminal and M discontinuous first time units corresponding to the second terminal, where the M discontinuous first time units do not overlap the N discontinuous first time units. A data packet is sent to the first terminal in the N discontinuous first time units, and a data packet is sent to the second terminal in the M discontinuous first time units. In the foregoing process, the network device sends a data packet to a terminal in discontinuous time units, so that a probability that a channel for sending the data packet is in a state of deep fading is low, in other words, quality of the channel for sending the data packet is improved. Therefore, according to the method, a time diversity gain can be improved, to reduce a decoding failure rate of the terminal, and reduce impact of a decoding failure on transmission of service data.

With reference to the first aspect, in a first possible implementation, the determining a first time unit occupied by a first transport channel includes: determining an identifier of the first transport channel; and determining, based on the identifier of the first transport channel, the first time unit occupied by the first transport channel.

Based on the foregoing possible implementation, the identifier of the first transport channel may be first determined, and then the first time unit occupied by the first transport channel is determined based on the identifier of the first transport channel, so that the data packet is sent to the first terminal in the first time unit occupied by the first transport channel.

With reference to the first aspect, in a first possible implementation, the identifier of the first transport channel is determined based on at least two of the following information: an identifier of the first terminal, an identifier of a serving cell of the first terminal, a quantity of transport channels, or a discontinuous reception cycle of the first terminal.

Based on the foregoing possible implementation, the identifier of the first transport channel may be determined based on at least two types of information of the identifier of the first terminal, the identifier of the serving cell of the first terminal, the quantity of transport channels, or the discontinuous reception cycle of the first terminal, so that the first time unit occupied by the first transport channel is subsequently determined based on the identifier of the first transport channel.

With reference to the first aspect, in a first possible implementation, the determining, based on the identifier of the first transport channel, the first time unit occupied by the first transport channel includes: determining, based on the identifier of the first transport channel and at least one of the following information, the first time unit occupied by the first transport channel: the quantity of transport channels, a first offset, first indication information, an offset of a second time unit, a total quantity of channels, information about a start time domain position of the first time unit occupied by the first transport channel, or information about an interval between two adjacent first time units occupied by the first transport channel, where the first indication information indicates whether a data packet is transmitted on the first transport channel, the second time unit includes at least two first time units, and the total quantity of channels is a quantity of channels corresponding to a transport channel carrying a data packet.

Based on the foregoing possible implementation, the first time unit occupied by the first transport channel may be determined based on the identifier of the first transport channel and at least one type of information of the quantity of transport channels, the first offset, the first indication information, the offset of the second time unit, the total quantity of channels, the information about the start time domain position of the first time unit occupied by the first transport channel, or the information about the interval between the two adjacent first time units occupied by the first transport channel, so that the data packet is subsequently sent to the first terminal in the first time unit occupied by the first transport channel.

With reference to the first aspect, in a first possible implementation, the data packet carried on the first transport channel includes information to be sent to the first terminal and information to be sent to a terminal other than the first terminal.

Based on the foregoing possible implementation, the data packet carried on the first transport channel includes information to be sent to a plurality of terminals, so that a decoding error rate of the first terminal can be reduced, and reliability of data packet transmission can be improved. Generally, the network device encodes information to be sent to a terminal, to obtain a data packet. In comparison with a data packet obtained by encoding information to be sent to one terminal, a data packet obtained by encoding information to be sent to a plurality of terminals may use a larger code length, so that a decoding error rate of the terminal can be reduced, and reliability of data packet transmission can be improved. In other words, in comparison with a case in which the data packet carried on the first transport channel includes information to be sent to one terminal, in a case in which the data packet carried on the first transport channel includes information to be sent to a plurality of terminals, a decoding error rate of the first terminal is lower, and reliability of data packet transmission is higher.

With reference to the first aspect, in a first possible implementation, frequencies corresponding to at least two of the N first time units occupied by the first transport channel are different.

Based on the foregoing possible implementation, the network device may send a data packet to the first terminal in a frequency hopping manner. A frequency response of a channel is affected by a transmission environment. If different frequency parts are separated by more than a coherence bandwidth, quality of channels is independent of each other. Therefore, the network device sends the data packet to the first terminal in the frequency hopping manner, so that a frequency diversity gain can be achieved, to further improve quality of a channel used when the network device sends the data packet to the first terminal.

With reference to the first aspect, in a first possible implementation, the method further includes: determining at least two first channels, where frequencies of the at least two first channels are different; and the sending a data packet to a first terminal in the first time unit occupied by the first transport channel includes: sending the data packet to the first terminal in the first time unit occupied by the first transport channel and on the at least two first channels.

Based on the foregoing possible implementation, at least two first channels with different frequencies may be determined, so that the network device sends the data packet to the first terminal in the frequency hopping manner.

With reference to the first aspect, in a first possible implementation, the frequency of the first channel is determined based on at least two of the following information: the identifier of the first transport channel, the quantity of transport channels, a first offset of a channel identifier, an identifier of a first time unit corresponding to the first channel, the total quantity of channels, a first frequency hopping step, or a first frequency hopping range.

Based on the foregoing possible implementation, the frequency of the first channel may be determined based on at least two types of information of the identifier of the first transport channel, the quantity of transport channels, the first offset of the channel identifier, the identifier of the first time unit corresponding to the first channel, the total quantity of channels, the first frequency hopping step, or the first frequency hopping range. In this way, the frequency of each of the at least two first channels can be determined, so that the network device knows a frequency at which the data packet is sent to the first terminal.

With reference to the first aspect, in a first possible implementation, an interval between the first time units occupied by the second transport channel is different from an interval between the first time units occupied by the first transport channel.

Based on the foregoing possible implementation, both the data packet sent to the first terminal and the data packet sent to the second terminal can achieve enough time diversity gains. In addition, the network device may integrate and send data packets corresponding to terminals (for example, the first terminal and the second terminal) that have different requirements for time diversity gains, to fully utilize resources when the data packets are sent, and improve resource utilization.

With reference to the first aspect, in a first possible implementation, the determining a first time unit occupied by a second transport channel includes: determining an identifier of the second transport channel; and determining, based on the identifier of the second transport channel, the first time unit occupied by the second transport channel.

Based on the foregoing possible implementation, the identifier of the second transport channel may be first determined, and then the first time unit occupied by the second transport channel is determined based on the identifier of the second transport channel, so that the data packet is sent to the second terminal in the first time unit occupied by the second transport channel.

With reference to the first aspect, in a first possible implementation, the identifier of the second transport channel is determined based on at least two of the following information: an identifier of the second terminal, an identifier of a serving cell of the second terminal, a quantity of transport channels, or a discontinuous reception cycle of the second terminal.

Based on the foregoing possible implementation, the identifier of the second transport channel may be determined based on at least two types of information of the identifier of the second terminal, the identifier of the serving cell of the second terminal, the quantity of transport channels, or the discontinuous reception cycle of the second terminal, so that the first time unit occupied by the second transport channel is subsequently determined based on the identifier of the second transport channel.

With reference to the first aspect, in a first possible implementation, the determining, based on the identifier of the second transport channel, the first time unit occupied by the second transport channel includes: determining, based on the identifier of the second transport channel and at least one of the following information, the first time unit occupied by the second transport channel: the quantity of transport channels, a second offset, second indication information, an offset of a second time unit, a total quantity of channels, information about a start time domain position of the first time unit occupied by the second transport channel, or information about an interval between two adjacent first time units occupied by the second transport channel, where the second indication information indicates whether a data packet is transmitted on the first transport channel. The second indication information and the first indication information may be same indication information, or may be different indication information. The second time unit includes at least two first time units. The total quantity of channels is a quantity of channels corresponding to a transport channel carrying a data packet. The second offset is defined in a protocol or determined by the network device. The second offset and the first offset may be the same, or may be different.

Based on the foregoing possible implementation, the first time unit occupied by the second transport channel can be determined based on the identifier of the second transport channel and at least one type of information of the quantity of transport channels, the second offset, the second indication information, the offset of the second time unit, and the total quantity of channels, the information about the start time domain position of the first time unit occupied by the second transport channel, or the information about the interval between the two adjacent first time units occupied by the second transport channel, so that the data packet is subsequently sent to the second terminal in the first time unit occupied by the second transport channel.

With reference to the first aspect, in a first possible implementation, the data packet carried on the second transport channel includes information to be sent to the second terminal and information to be sent to a terminal other than the second terminal.

Based on the foregoing possible implementation, the data packet carried on the second transport channel includes information to be sent to a plurality of terminals, so that a decoding error rate of the second terminal can be reduced, and reliability of data packet transmission can be improved. Generally, the network device encodes information to be sent to a terminal, to obtain a data packet. In comparison with a data packet obtained by encoding information to be sent to one terminal, a data packet obtained by encoding information to be sent to a plurality of terminals may use a larger code length, so that a decoding error rate of the terminal can be reduced, and reliability of data packet transmission can be improved. In other words, in comparison with a case in which the data packet carried on the second transport channel includes information to be sent to one terminal, in a case in which the data packet carried on the second transport channel includes information to be sent to a plurality of terminals, a decoding error rate of the second terminal is lower, and reliability of data packet transmission is higher.

With reference to the first aspect, in a first possible implementation, frequencies corresponding to at least two of the M first time units occupied by the second transport channel are different.

Based on the foregoing possible implementation, the network device may send a data packet to the second terminal in a frequency hopping manner. A frequency response of a channel is affected by a transmission environment. If different frequency parts are separated by more than a coherence bandwidth, quality of channels is independent of each other. Therefore, the network device sends the data packet to the second terminal in the frequency hopping manner, so that a frequency diversity gain can be achieved, to further improve quality of a channel used when the network device sends the data packet to the second terminal.

With reference to the first aspect, in a first possible implementation, the method further includes: determining at least two second channels, where frequencies of the at least two second channels are different; and the sending a data packet to a second terminal in the first time unit occupied by the second transport channel includes: sending the data packet to the second terminal in the first time unit occupied by the second transport channel and on the at least two second channels.

Based on the foregoing possible implementation, at least two second channels with different frequencies may be determined, so that the network device sends the data packet to the second terminal in the frequency hopping manner.

With reference to the first aspect, in a first possible implementation, the frequency of the second channel is determined based on at least two of the following information: the identifier of the second transport channel, the quantity of transport channels, a second offset of a channel identifier, an identifier of a first time unit corresponding to the second channel, the total quantity of channels, a second frequency hopping step, or a second frequency hopping range. The second offset of the channel identifier and the first offset of the channel identifier may be the same, or may be different. The second frequency hopping step and the first frequency hopping step may be the same, or may be different. The second frequency hopping range and the first frequency hopping range may be the same, or may be different.

Based on the foregoing possible implementation, the frequency of the second channel may be determined based on at least two types of information of the identifier of the second transport channel, the quantity of transport channels, the second offset of the channel identifier, the identifier of the first time unit corresponding to the second channel, the total quantity of channels, the second frequency hopping step, or the second frequency hopping range. In this way, the frequency of each of the at least two second channels can be determined, so that the network device knows a frequency at which the data packet is sent to the second terminal.

According to a second aspect, a data packet transmission method is provided. A communication apparatus that performs the method may be a first terminal, or may be a module, for example, a chip or a chip system, used in the first terminal. The following uses an example in which an execution body is the first terminal for description. The method includes: determining a first time unit occupied by a transport channel; and receiving a data packet from a network device in the first time unit occupied by the transport channel. The transport channel is for carrying a data packet, the transport channel occupies N first time units, at least two of the N first time units are discontinuous in time domain, and N is a natural number greater than or equal to 2.

Based on the method provided in the second aspect, the first terminal may determine N discontinuous first time units corresponding to the first terminal, and receive the data packet from the network device in the N discontinuous first time units. In the foregoing process, the first terminal receives the data packet from the network device in discontinuous time units, so that a probability that a channel for receiving the data packet is in a state of deep fading is low, in other words, quality of the channel for receiving the data packet is improved. Therefore, according to the method, a time diversity gain can be improved, to reduce a decoding failure rate of the terminal, and reduce impact of a decoding failure on transmission of service data.

With reference to the second aspect, in a first possible implementation, the determining a first time unit occupied by a transport channel includes: determining an identifier of the transport channel; and determining, based on the identifier of the transport channel, the first time unit occupied by the transport channel.

Based on the foregoing possible implementation, the identifier of the first transport channel may be first determined, and then the first time unit occupied by the first transport channel is determined based on the identifier of the first transport channel, so that the data packet from the network device is received in the first time unit occupied by the first transport channel.

With reference to the second aspect, in a first possible implementation, the identifier of the transport channel is determined based on at least two of the following information: an identifier of the first terminal, an identifier of a serving cell of the first terminal, a quantity of transport channels, or a discontinuous reception cycle of the first terminal.

Based on the foregoing possible implementation, the identifier of the first transport channel may be determined based on at least two types of information of the identifier of the first terminal, the identifier of the serving cell of the first terminal, the quantity of transport channels, or the discontinuous reception cycle of the first terminal, so that the first time unit occupied by the first transport channel is subsequently determined based on the identifier of the first transport channel.

With reference to the second aspect, in a first possible implementation, the determining, based on the identifier of the transport channel, the first time unit occupied by the transport channel includes: determining, based on the identifier of the transport channel and at least one of the following information, the first time unit occupied by the transport channel: the quantity of transport channels, a first offset, first indication information, an offset of a second time unit, a total quantity of channels, information about a start time domain position of the first time unit occupied by the transport channel, or information about an interval between two adjacent first time units occupied by the transport channel, where the first indication information indicates whether a data packet is transmitted on the first transport channel, the second time unit includes at least two first time units, and the total quantity of channels is a quantity of channels corresponding to a transport channel carrying a data packet.

Based on the foregoing possible implementations, the first time unit occupied by the first transport channel may be determined based on the identifier of the first transport channel and at least one type of information of the quantity of transport channels, the first offset, the first indication information, the offset of the second time unit, the total quantity of channels, the information about the start time domain position of the first time unit occupied by the transport channel, or the information about the interval between two adjacent first time units occupied by the first transport channel, so that the data packet from the network device is subsequently received in the first time unit occupied by the first transport channel.

With reference to the second aspect, in a first possible implementation, the data packet carried on the transport channel includes information to be sent to the first terminal and information to be sent to a terminal other than the first terminal.

Based on the foregoing possible implementation, the data packet carried on the first transport channel includes information to be sent to a plurality of terminals, so that a decoding error rate of the first terminal can be reduced, and reliability of data packet transmission can be improved. Generally, the network device encodes information to be sent to a terminal, to obtain a data packet. In comparison with a data packet obtained by encoding information to be sent to one terminal, a data packet obtained by encoding information to be sent to a plurality of terminals may use a larger code length, so that a decoding error rate of the terminal can be reduced, and reliability of data packet transmission can be improved. In other words, in comparison with a case in which the data packet carried on the first transport channel includes information to be sent to one terminal, in a case in which the data packet carried on the first transport channel includes information to be sent to a plurality of terminals, a decoding error rate of the first terminal is lower, and reliability of data packet transmission is higher.

With reference to the second aspect, in a first possible implementation, frequencies corresponding to at least two of the N first time units are different.

Based on the foregoing possible implementation, the first terminal may receive the data packet from the network device in a frequency hopping manner. A frequency response of a channel is affected by a transmission environment. If different frequency parts are separated by more than a coherence bandwidth, quality of channels is independent of each other. Therefore, the first terminal receives the data packet from the network device in the frequency hopping manner, so that a frequency diversity gain can be achieved, to further improve quality of a channel used when the first terminal receives the data packet from the network device.

With reference to the second aspect, in a first possible implementation, the method further includes: determining at least two channels, where frequencies of the at least two channels are different; and; and the receiving a data packet from a network device in the first time unit occupied by the transport channel includes: receiving the data packet from the network device in the first time unit occupied by the transport channel and on the at least two channels.

Based on the foregoing possible implementation, at least two first channels with different frequencies may be determined, so that the first terminal receives the data packet from the network device in the frequency hopping manner.

With reference to the second aspect, in a first possible implementation, the frequency of the first channel is determined based on at least two of the following information: the identifier of the transport channel, a quantity of transport channels, an offset of a channel identifier, an identifier of a first time unit corresponding to the first channel, a total quantity of channels, a frequency hopping step, or a frequency hopping range. The first channel is any one channel in the at least two channels.

Based on the foregoing possible implementation, the frequency of the first channel may be determined based on at least two types of information of the identifier of the first transport channel, the quantity of transport channels, the first offset of the channel identifier, the identifier of the first time unit corresponding to the first channel, the total quantity of channels, the first frequency hopping step, or the first frequency hopping range. In this way, the frequency of each of the at least two first channels can be determined, so that the first terminal knows a frequency at which the data packet from the network device is received.

According to a third aspect, a communication apparatus is provided, to implement the foregoing method. The communication apparatus may be the network device in the first aspect, or an apparatus including the network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and a sending module. The processing module may be configured to implement a processing function in the first aspect and any possible implementation of the first aspect. The processing module may be, for example, a processor. The sending module may also be referred to as a sending unit, and is configured to implement a sending function in the first aspect and any possible implementation of the first aspect. The sending module may include a sending circuit, a sending machine, a sender, or a communication interface.

According to a fourth aspect, a communication apparatus is provided, to implement the foregoing method. The communication apparatus may be the first terminal in the second aspect, or an apparatus including the first terminal. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus may include a processing module and a receiving module. The processing module may be configured to implement a processing function in the second aspect and any possible implementation of the second aspect. The processing module may be, for example, a processor. The receiving module may also be referred to as a receiving unit, and is configured to implement a receiving function in the second aspect and any possible implementation of the second aspect. The receiving module may include a receiver circuit, a receiving machine, a receiver, or a communication interface.

According to a fifth aspect, a communication apparatus is provided, including a processor. The processor is configured to: after being coupled to a memory and reading instructions in the memory, perform, based on the instructions, the method in any one of the foregoing aspects. The communication apparatus may be the network device in the first aspect, or an apparatus including the network device. Alternatively, the communication apparatus may be the first terminal in the second aspect, or an apparatus including the first terminal.

With reference to the fifth aspect, in a possible implementation, the communication apparatus further includes a memory. The memory is configured to store necessary program instructions and data.

With reference to the fifth aspect, in a possible implementation, the communication apparatus is a chip or a chip system. Optionally, when the communication apparatus is the chip system, the communication apparatus may include a chip, or may include the chip and another discrete component.

According to a sixth aspect, a communication apparatus is provided, including a processor and an interface circuit. The interface circuit is configured to: receive a computer program or instructions, and transmit the computer program or the instructions to a processor. The processor is configured to execute the computer program or the instructions, to enable the communication apparatus to perform the method in any one of the foregoing aspects.

With reference to the sixth aspect, in a possible implementation, the communication apparatus is a chip or a chip system. Optionally, when the communication apparatus is the chip system, the communication apparatus may include a chip, or may include the chip and another discrete component.

According to a seventh aspect, a computer-readable storage medium is provided. The computer-readable storage medium stores instructions. When the instructions are run on a computer, the computer is enabled to perform the method in any one of the foregoing aspects.

According to an eighth aspect, a computer program product including instructions is provided. When the computer program product runs on a computer, the computer is enabled to perform the method in any one of the foregoing aspects.

For a technical effect achieved by any one of the possible implementations of the third aspect to the eighth aspect, refer to a technical effect achieved by any one of the first aspect, the second aspect, or different possible implementations of the first aspect or the second aspect. Details are not described herein again.

According to a ninth aspect, a communication system is provided. The communication system includes a network device configured to perform the method in the first aspect and a first terminal configured to perform the method in the second aspect.

It may be understood that the solutions in the foregoing aspects may be combined on a premise that the solutions are not contradictory.

## BRIEF DESCRIPTION OF DRAWINGS

FIG. 1 is a diagram of an architecture of a terminal;

FIG. 2 is a diagram of sending a data packet by a network device;
FIG. 3 is a diagram of a change of an amplitude of a channel response with time;
FIG. 4 is a diagram of an interleaving channel according to an embodiment of this application;
FIG. 5 is a diagram of an architecture of a communication system according to an embodiment of this application;
FIG. 6 is a diagram of a hardware structure of a communication apparatus according to an embodiment of this application;
FIG. 7 is a schematic flowchart of a data packet transmission method according to an embodiment of this application;
FIG. 8 is a diagram of a storage unit according to an embodiment of this application;
FIG. 9 is a diagram of sending a data packet by a network device according to an embodiment of this application;
FIG. 10 is a diagram of a first time unit and a channel according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

## DESCRIPTION OF EMBODIMENTS

As described in the background, when operating in a "connected mode", a terminal may exchange signaling with a network device, to receive and send a data packet. When operating in an "idle mode", the terminal may enter a sleep state, and periodically wake up, to detect whether there is a data packet sent to the terminal. If the data packet sent to the terminal is detected, and the terminal is indicated to enter the connected mode, the terminal enters the connected mode; otherwise, the terminal remains in the idle mode and continues to sleep. In embodiments of this application, the data packet may include one or more transport blocks (transport blocks, TBs). One TB may include one or more code blocks (code blocks, CBs). When transmission quality is reliable, after receiving the data packet, the terminal can independently complete demodulation and decoding.

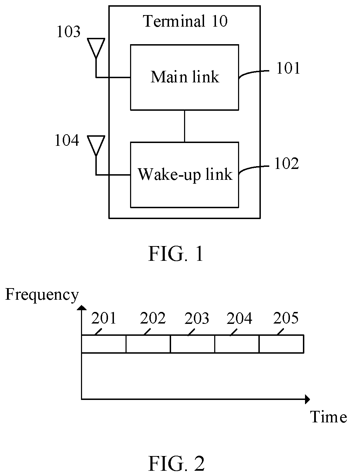

In a specific implementation, the terminal may implement the foregoing functions by using the architecture shown in FIG. 1. In FIG. 1, a terminal 10 includes a main link (main radio) 101 for receiving a data packet in a connected mode and a wake-up link (wake-up radio, WUR) 102 for receiving a data packet in an idle mode. When the terminal 10 has a service and operates in the connected mode, the main link 101 is enabled, and a data packet is received through an antenna 103. In this case, power consumption of the terminal 10 is high. When the terminal 10 has no service and operates in the idle mode, the main link 101 is disabled, the wake-up link 102 is enabled, and a wake-up signal is periodically received through an antenna 104. In this case, power consumption of the terminal 10 is low, and an effect of power saving can be achieved. After the wake-up link 102 receives the wake-up signal sent to the terminal 10, the terminal 10 may be triggered to enable the main link 101, so that the terminal 10 enters the connected mode, and then performs normal data packet receiving and sending operations.

Currently, in both transmission of the wake-up signal and normal data packet receiving and sending operations in the connected mode, a network device may send data packets to different terminals in a TDM manner. A diagram of sending a data packet by a network device shown in FIG. 2 is used as an example. The network device may send a data packet to a terminal 1 in a time unit 201, send a data packet to a terminal 2 in a time unit 202, send a data packet to a terminal 3 in a time unit 203, send a data packet to a terminal 4 in a time unit 204, and send a data packet to a terminal 5 in a time unit 205.

It may be understood that, when a data packet is small, time for sending the data packet by the network device is short. For example, sending is completed within 2 milliseconds (ms), and enough time diversity gains are not achieved. In this case, quality of a channel for transmitting the data packet has great impact on transmission of the data packet. If the channel is subject to deep fading in a time period for sending the data packet, quality of a received signal is poor. Consequently, decoding of the terminal fails, and transmission of service data is affected.

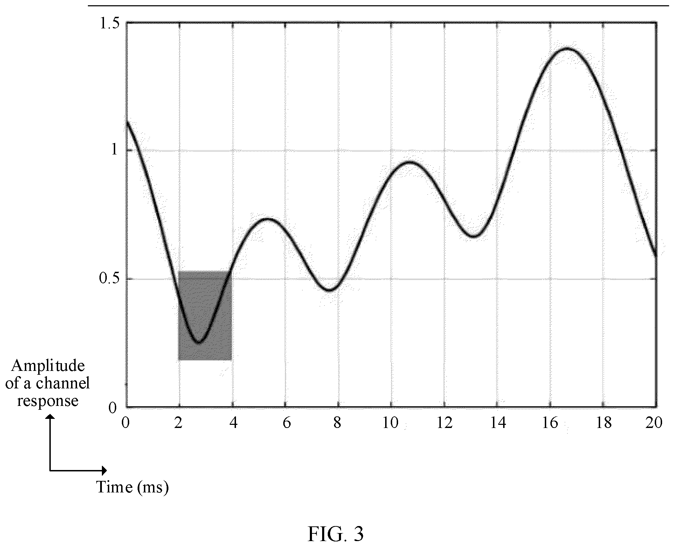

Generally, quality of a channel changes with time. For example, FIG. 3 is a diagram of a change of an amplitude of a channel response of a terminal with time. In FIG. 3, the channel is in a state of deep fading from the 2nd ms to the 4th ms. In this period of time, a received signal-to-noise ratio of a data packet is very low, and a case in which the terminal fails to perform decoding easily occurs. In other words, if a network device sends a data packet to the terminal in this period of time, there is a high probability that the terminal fails to perform decoding. Consequently, transmission of service data is affected.

To resolve the foregoing problem, an embodiment of this application provides a data packet transmission method. A network device may determine a plurality of discontinuous time units for each terminal, and send a data packet to the terminal in the plurality of time units corresponding to the terminal. In the method, for any terminal, the network device sends a data packet in discontinuous time units. For example, a data packet that is originally continuously sent and needs to be sent within 2 ms is sent in discontinuous time units, and time for completing sending is extended to 8 ms. In comparison with a channel corresponding to continuous time units, a probability that a channel corresponding to discontinuous time units is in a state of deep fading is low. In other words, quality of the channel corresponding to the discontinuous time units should be better than quality of the channel corresponding to the continuous time units. Therefore, according to the method, a time diversity gain can be improved, to reduce a decoding failure rate of the terminal, and reduce impact of a decoding failure on transmission of service data.

In this embodiment of this application, a plurality of discontinuous time units for carrying a data packet may be referred to as a transport channel or an interleaving channel (where the following embodiments uses the interleaving channel an example for description), or may be named in another manner. This is not limited. In other words, the interleaving channel (for example, a first interleaving channel or a second interleaving channel in the following embodiments) in this embodiment of this application may be for carrying a data packet. The interleaving channel may occupy a plurality of time units. At least two of the plurality of time units are discontinuous in time domain. The time unit is a time domain unit, and may include a period of time. For example, the time unit includes at least one symbol, at least one slot (slot), or at least one sub slot (sub slot). The following uses an example in which the time unit includes one slot for description.

In this embodiment of this application, "a plurality of" may be replaced with "at least two". For example, a plurality of time units may be replaced with at least two time units. A unified description is provided herein, and details are not described below again.

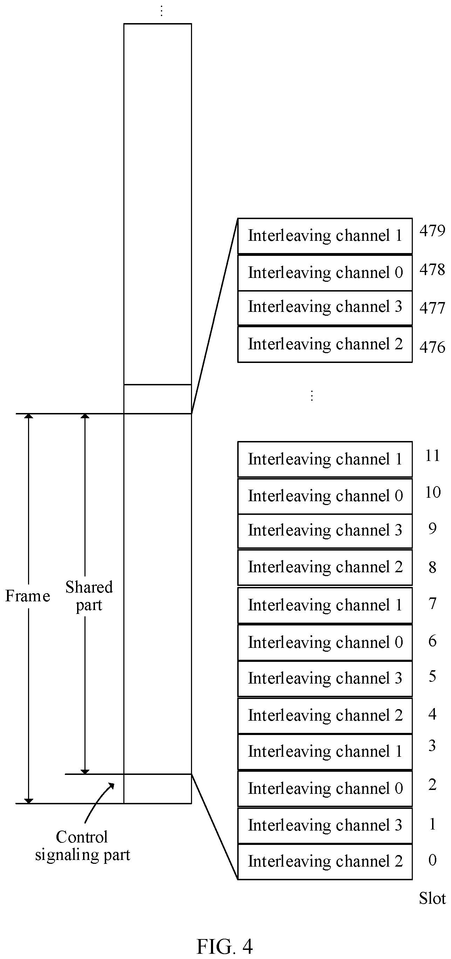

FIG. 4 is a diagram of an interleaving channel. FIG. 4 shows two frames (for example, WUR frames). Either frame includes a control signaling part and a shared part. The control signaling part may be for transmitting control signaling. The control signaling may include a related configuration of the interleaving channel, for example, a quantity of interleaving channels, and/or an offset of a slot occupied by the interleaving channel, and/or indication information indicating whether the interleaving channel is used. The shared part may be for transmitting a data packet. It may be understood that the frame may not include the control signaling part, in other words, all slots included in the frame are for transmitting a data packet.

In FIG. 4, the shared part of either frame includes 480 slots. Each slot belongs to one interleaving channel, for example, belongs to an interleaving channel 0, an interleaving channel 1, an interleaving channel 2, or an interleaving channel 3, and interleaving channels corresponding to two adjacent slots are different. In other words, one interleaving channel occupies a plurality of slots, and the plurality of slots occupied by one interleaving channel are discontinuous in time domain. For example, the interleaving channel 0 occupies a slot 2, a slot 6, a slot 10, ..., and a slot 478, the interleaving channel 1 occupies a slot 3, a slot 7, a slot 11, ..., and a slot 479, the interleaving channel 2 occupies a slot 0, a slot 4, a slot 8, ..., and a slot 476, and the interleaving channel 3 occupies a slot 1, a slot 5, a slot 9, ..., and a slot 477.

In FIG. 4, any type of interleaving channel, such as the interleaving channel 0, the interleaving channel 1, the interleaving channel 2, or the interleaving channel 3, occupies 120 slots, and any type of interleaving channel may carry a data packet. For example, a network device sends a data packet 0 to a terminal 0 on the interleaving channel 0 (for example, the slot 2, the slot 6, the slot 10, ..., and the slot 478), sends a data packet 1 to a terminal 1 on the interleaving channel 1 (for example, the slot 3, the slot 7, the slot 11, ..., and the slot 479), sends a data packet 2 to a terminal 2 on the interleaving channel 2 (for example, the slot 0, the slot 4, the slot 8, ..., and the slot 476), and sends a data packet 3 to a terminal 3 on the interleaving channel 3 (for example, the slot 1, the slot 5, the slot 9, ..., and the slot 477).

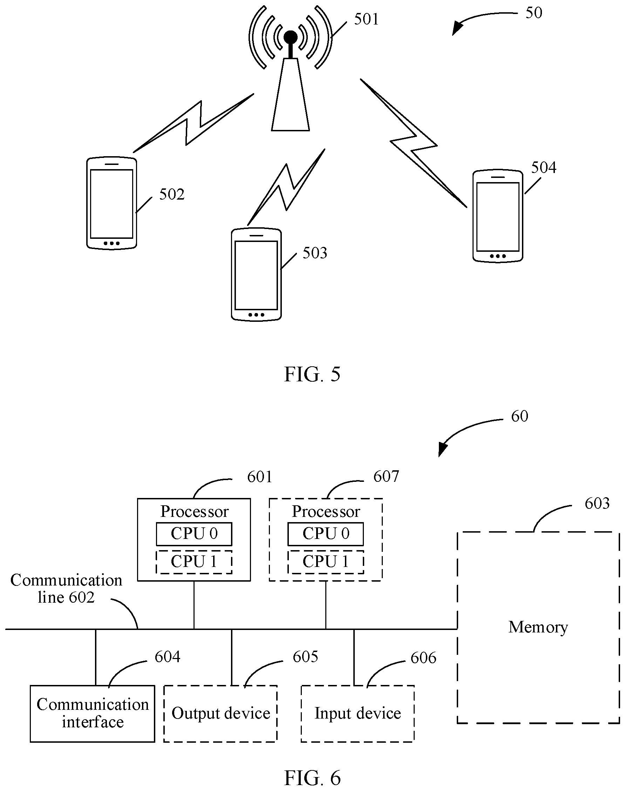

It may be understood that the data packet transmission method provided in embodiments of this application may be applied to various communication systems. For example, the communication system may be a long term evolution (long term evolution, LTE) system, a 5th generation (5th generation, 5G) communication system, a Wi-Fi system, a 3rd generation partnership project (3rd generation partnership project, 3GPP)-related communication system, a future evolved communication system (for example, a 6th generation (6th generation, 6G) communication system), or a system integrating a plurality of systems. This is not limited. 5G may also be referred to as new radio (new radio, NR). The following uses a communication system 50 shown in FIG. 5 as an example to describe the method provided in embodiments of this application. FIG. 5 is merely a diagram, and does not constitute a limitation on a scenario to which the technical solutions provided in this application are applicable.

FIG. 5 is a diagram of an architecture of the communication system 50 according to an embodiment of this application. In FIG. 5, the communication system 50 may include one or more network devices 501 (where only one network device is shown) and a terminal 502 to a terminal 504 that can communicate with the network device 501.

In FIG. 5, the network device may provide a wireless access service for the terminal. Specifically, each network device corresponds to one service coverage area. A terminal that enters the area may communicate with the network device through a Uu interface, to receive a wireless access service provided by the network device. Optionally, the service coverage area may include one or more cells (cells). The cell may also be referred to as a serving cell.

The network device in embodiments of this application, for example, the network device 501, may be any device having a wireless transceiver function. The network device includes but is not limited to: an evolved NodeB (NodeB or eNB or e-NodeB, evolved NodeB) in LTE, a base station (gNodeB or gNB) or a transmission reception point (transmission receiving point/transmission reception point, TRP) in NR, a base station that subsequently evolves in the 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a radio controller in a cloud radio access network (cloud radio access network, CRAN) scenario. Alternatively, the network device may be a central unit (central unit, CU) and/or a distributed unit (distributed unit, DU). The network device may alternatively be a server, a wearable device, a machine communication device, a vehicle-mounted device, or the like. The following uses an example in which the network device is a base station for description. The plurality of network devices may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, or may communicate with a base station supporting a 5G network, or may support a dual connection to a base station in an LTE network and a base station in a 5G network.

The terminal in embodiments of this application, for example, the terminal 502, the terminal 503, or the terminal 504, is a device having a wireless transceiver function. The terminal may be deployed on land, where the deployment includes indoor or outdoor, or handheld or vehicle-mounted deployment, may be deployed on water (for example, on a ship), or may be deployed in air (for example, on an airplane, a balloon, or a satellite). The terminal may also be referred to as a terminal device. The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

By way of example but not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. For example, the wearable device is not only a hardware device, but also a device that implements a powerful function through software support, data exchange, and cloud interaction. In a broad sense, intelligent wearable devices include full-featured and large-size devices that can implement complete or partial functions without depending on smartphones, for example, smart watches or smart glasses, and include devices that are dedicated to only one type of application function and that need to be used together with other devices such as the smartphones, for example, various smart bands or smart jewelry used for monitoring physical signs.

In this application, the terminal may be a terminal in an internet of things (internet of things, IoT) system. An IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application.

The communication system 50 shown in FIG. 5 is merely used as an example, but is not intended to limit the technical solutions of this application. A person skilled in the art should understand that, in a specific implementation process, the communication system 50 may further include another device, and a quantity of network devices and a quantity of terminals may alternatively be determined based on a specific requirement. This is not limited.

Optionally, each device (for example, the network device 501, the terminal 502, the terminal 503, or the terminal 504) in FIG. 5 in this embodiment of this application may also be referred to as a communication apparatus, and may be a general-purpose device or a dedicated device. This is not specifically limited in embodiments of this application.

Optionally, a related function of each device (for example, the network device 501, the terminal 502, the terminal 503, or the terminal 504) in FIG. 5 in this embodiment of this application may be implemented by one device, may be implemented jointly by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

In a specific implementation, each device (for example, the network device 501, the terminal 502, the terminal 503, or the terminal 504) in FIG. 5 in this embodiment of this application may use a composition structure shown in FIG. 6, or include components shown in FIG. 6. FIG. 6 is a diagram of a hardware structure of a communication apparatus to which an embodiment of this application is applicable. The communication apparatus 60 includes at least one processor 601 and at least one communication interface 604, and is configured to implement the method provided in embodiments of this application. The communication apparatus 60 may further include a communication line 602 and a memory 603.

The processor 601 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 602 may include a path, for example, a bus, for transferring information between the foregoing components.

The communication interface 604 is configured to communicate with another device or a communication network. The communication interface 604 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 603 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may exist independently, and is coupled to the processor 601 through the communication line 602. Alternatively, the memory 603 may be integrated with the processor 601. The memory provided in embodiments of this application may be usually non-volatile.

The memory 603 is configured to store computer-executable instructions for performing the solutions provided in embodiments of this application, and the processor 601 controls execution of the computer-executable instructions. The processor 601 is configured to execute the computer-executable instructions stored in the memory 603, to implement the methods provided in embodiments of this application. Alternatively, optionally, in embodiments of this application, the processor 601 may perform processing-related functions in methods provided in the following embodiments of this application, and the communication interface 604 is responsible for communicating with another device or a communication network. This is not specifically limited in embodiments of this application.

Optionally, the computer-executable instructions in embodiments of this application may also be referred to as application program code. This is not specifically limited in embodiments of this application.

Coupling in embodiments of this application may be indirect coupling or a communication connection between apparatuses, units, or modules in an electrical form, a mechanical form, or another form, and is for information exchange between the apparatuses, the units, or the modules.

In an embodiment, the processor 601 may include one or more CPUs, for example, a CPU 0 and a CPU 1 in FIG. 6.

In an embodiment, the communication apparatus 60 may include a plurality of processors, for example, the processor 601 and a processor 607 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 60 may further include an output device 605 and/or an input device 606. The output device 605 is coupled to the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 is coupled to the processor 601, and may receive an input of a user in a plurality of manners. For example, the input device 606 may be a mouse, a keyboard, a touchscreen device, or a sensor device.

It may be understood that the composition structure shown in FIG. 6 does not constitute a limitation on the communication apparatus. In addition to the components shown in FIG. 6, the communication apparatus may include more or fewer components than those shown in the figure, combine some components, or have different component arrangements.

The following describes the method provided in embodiments of this application with reference to the accompanying drawings. Devices in the following embodiments may have components shown in FIG. 6. Details are not described again.

It may be understood that in embodiments of this application, "transmitting" may be understood as sending and/or receiving based on a specific context. "Transmitting" may be a noun or a verb. "Transmitting" is often used to substitute sending and/or receiving when an execution body of an action is not emphasized. For example, the phrase "transmitting a data packet" may be understood as "sending the data packet" from a perspective of a transmit end, and may be understood as "receiving the data packet" from a perspective of a receive end.

It may be understood that names of messages between devices, names of parameters in the messages, or the like in the following embodiments of this application are merely examples, and there may be other names in a specific implementation. This is not specifically limited in embodiments of this application.

It may be understood that, in embodiments of this application, "/" may represent an "or" relationship between associated objects. For example, A/B may represent A or B. "And/or" may represent that three relationships exist between the associated objects. For example, A and/or B may represent the following three cases: Only A exists, both A and B exist, and only B exists. A and B may be singular or plural. In addition, a representation similar to "at least one of A, B, and C" or "at least one of A, B, or C" usually represents any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

It may be understood that "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, and are not intended to limit time. The terms do not mean that a determining action is required during implementation, and do not mean any other limitation.

"Simultaneously" in this application may be understood as being at a same time point, may be understood as being within a time period, or may be understood as being within a same periodicity.

It may be understood that a same step or step or technical features that have a same function in embodiments of this application may be mutually referenced in different embodiments.

It may be understood that, in embodiments of this application, a network device and/or a terminal may perform some or all of steps in embodiments of this application. The steps are merely examples. In embodiments of this application, other steps or variations of various steps may alternatively be performed. In addition, the steps may be performed in a sequence different from a sequence presented in embodiments of this application, and not all the steps in embodiments of this application need to be performed.

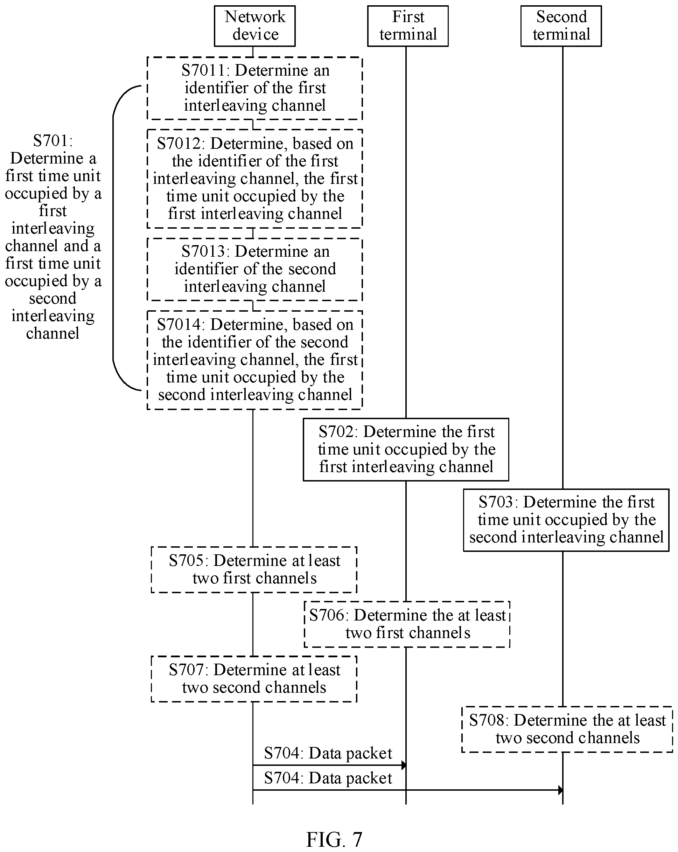

FIG. 7 shows a data packet transmission method according to an embodiment of this application. The method is described by using an example in which a network device sends data packets to a first terminal and a second terminal. The method may include the following steps.

S701: The network device determines a first time unit occupied by a first interleaving channel and a first time unit occupied by a second interleaving channel.

The network device may be the network device 501 in the communication system 50 shown in FIG. 5.

In a possible implementation, the first interleaving channel (which may be replaced with a first transport channel) is for carrying a data packet. The first interleaving channel occupies N first time units, and at least two of the N first time units are discontinuous in time domain. Similarly, the second interleaving channel (which may be replaced with a second transport channel) is for carrying a data packet. The second interleaving channel occupies M first time units, and at least two of the M first time units are discontinuous in time domain.

N and M are natural numbers greater than or equal to 2, and N and M may be the same, or may be different. The N first time units do not overlap the M first time units. The first time unit is a time domain unit, and may include a period of time. For example, the first time unit includes at least one symbol, at least one slot, or at least one sub slot.

For example, the interleaving channel shown in FIG. 4 is used as an example. The first interleaving channel or the second interleaving channel may be any interleaving channel shown in FIG. 4. For example, the first interleaving channel is the interleaving channel 0 in FIG. 4, and the second interleaving channel is the interleaving channel 1 in FIG. 4. Alternatively, the first interleaving channel is the interleaving channel 3 in FIG. 4, and the second interleaving channel is the interleaving channel 2 in FIG. 4.

In a possible implementation, a data packet carried on an interleaving channel includes information to be sent to at least one terminal.

For example, the data packet carried on the first interleaving channel includes information to be sent to the first terminal, and the data packet carried on the second interleaving channel includes information to be sent to the second terminal.

For another example, the data packet carried on the first interleaving channel includes information to be sent to the first terminal and information to be sent to a terminal other than the first terminal, and the data packet carried on the second interleaving channel includes information to be sent to the second terminal and information to be sent to a terminal other than the second terminal.

In this embodiment of this application, the first terminal is different from the second terminal. For example, the first terminal or the second terminal may be any terminal in the communication system 50 shown in FIG. 5. For example, the first terminal is the terminal 502, and the second terminal is the terminal 503. Alternatively, the first terminal is the terminal 503, and the second terminal is the terminal 504.

For example, the data packet carried on the first interleaving channel includes the information to be sent to the first terminal and the information to be sent to the terminal other than the first terminal. The data packet carried on the first interleaving channel may include information about the first terminal, information about a terminal 3, and information about a terminal 4. In this case, if the data packet carried on the first interleaving channel is 360 bits, the $1^{st}$ bit to the $120^{th}$ bit may be allocated to the first terminal, the $121^{st}$ bit to the $240^{th}$ bit may be allocated to the terminal 3, and the $241^{st}$ bit to the $360^{th}$ bit may be allocated to the terminal 4.

Optionally, each part of bits carries first information, and the first information is for determining an identifier of a terminal corresponding to the part of bits. In this way, a terminal to which data of the part of bits is to be sent may be indicated.

In a possible design, the first information includes an identifier of a terminal. Alternatively, the first information includes a part of an identifier of a terminal. Alternatively, the first information includes mapping information of an identifier of a corresponding terminal, and the mapping information is for determining the identifier of the terminal.

For example, the $1^{st}$ bit to the $120^{th}$ bit carry an identifier of the first terminal, the $121^{st}$ bit to the $240^{th}$ bit carry an identifier of the terminal 3, and the $241^{st}$ bit to the $360^{th}$ bit carry an identifier of the terminal 4. Alternatively, the $1^{st}$ bit to the $120^{th}$ bit carry the last X bits of an identifier of the first terminal, the $121^{st}$ bit to the $240^{th}$ bit carry the last X bits of an identifier of the terminal 3, and the $241^{st}$ bit to the $360^{th}$ bit carry the last X bits of an identifier of the terminal 4. Alternatively, the $1^{st}$ bit to the $120^{th}$ bit carry an index 1, and the index 1 has a mapping relationship with an identifier of the first terminal. The $121^{st}$ bit to the $240^{th}$ bit carry an index 2, and the index 2 has a mapping relationship with an identifier of the terminal 3. The $241^{st}$ bit to the $360^{th}$ bit carry an index 3, and the index 3 has a mapping relationship with an identifier of the terminal 4.

It may be understood that the network device may encode the information to be sent to the at least one terminal, to obtain a data packet. In comparison with a data packet obtained by encoding information to be sent to one terminal, a data packet obtained by encoding information to be sent to a plurality of terminals may use a larger code length, so that a decoding error rate of the terminal can be reduced, and reliability of data packet transmission can be improved. In other words, in comparison with a case in which a data packet carried on an interleaving channel includes information to be sent to one terminal, in a case in which a data packet carried on the interleaving channel includes information to be sent to a plurality of terminals, a decoding error rate of the terminal is lower, and reliability of data packet transmission is higher.

In a possible implementation, that the network device determines the first time unit occupied by the first interleaving channel includes: The network device determines an identifier of the first interleaving channel, and determines, based on the identifier of the first interleaving channel, the first time unit occupied by the first interleaving channel. This process is described in subsequent S7011 and S7012. Details are not described herein.

In a possible implementation, that the network device determines the first time unit occupied by the second interleaving channel includes: The network device determines an identifier of the second interleaving channel, and determines, based on the identifier of the second interleaving channel, the first time unit occupied by the second interleaving channel. This process is similar to the process in which the network device determines the first time unit occupied by the first interleaving channel. Therefore, refer to corresponding descriptions in subsequent S7011 and S7012. Details are not described.

S702: The first terminal determines the first time unit occupied by the first interleaving channel.

In a possible implementation, that the first terminal determines the first time unit occupied by the first interleaving channel includes: The first terminal determines the identifier of the first interleaving channel, and determines, based on the identifier of the first interleaving channel, the first time unit occupied by the first interleaving channel. This process is similar to the process in which the network device determines the first time unit occupied by the first interleaving channel. Therefore, refer to corresponding descriptions in subsequent S7011 and S7012. Details are not described.

S703: The second terminal determines the first time unit occupied by the second interleaving channel.

In a possible implementation, that the second terminal determines the first time unit occupied by the second interleaving channel includes: The second terminal determines the identifier of the second interleaving channel, and determines, based on the identifier of the second interleaving channel, the first time unit occupied by the second interleaving channel. This process is similar to the process in which the network device determines the first time unit occupied by the first interleaving channel. Therefore, refer to corresponding descriptions in subsequent S7011 and S7012.

Details are not described.

It may be understood that a sequence of performing S701 to S703 is not limited in embodiments of this application. For example, in this embodiment of this application, S701 may be first performed, then S702 is performed, and finally S703 is performed. Alternatively, in this embodiment of this application, S702 may be first performed, then S701 is performed, and finally S703 is performed. Alternatively, in this embodiment of this application, S703 may be first performed, then S702 is performed, and finally S701 is performed. Alternatively, in this embodiment of this application, S701 to S703 may be simultaneously performed. It should be understood that there may be a plurality of sequences of performing S701 to S703. Before the network device sends a data packet to the first terminal, and before the first terminal receives the data packet, the first time unit occupied by the first interleaving channel is determined. Before the network device sends a data packet to the second terminal, and before the second terminal receives the data packet, the first time unit occupied by the second interleaving channel is determined. Examples are not listed one by one herein.

S704: The network device sends a data packet to the first terminal in the first time unit occupied by the first interleaving channel, and sends a data packet to the second terminal in the first time unit occupied by the second interleaving channel. Correspondingly, the first terminal receives the data packet from the network device in the first time unit occupied by the first interleaving channel, and the second terminal receives the data packet from the network device in the first time unit occupied by the second interleaving channel.

In a possible implementation, the network device sends the data packet to the first terminal in all or some of the N first time units. Similarly, the network device sends the data packet to the second terminal in all or some of the M first time units.

For example, the interleaving channel shown in FIG. 4 is used as an example. When the N first time units include the slot 0, the slot 4, the slot 8, ..., and the slot 476, the network device may send the data packet to the first terminal in at least two of the slot 0, the slot 4, the slot 8, ..., and the slot 476. In this case, the first interleaving channel is the interleaving channel 2 in FIG. 4. When the M first time units include the slot 1, the slot 5, the slot 9, ..., and the slot 477, the network device may send the data packet to the second terminal in at least two of the slot 1, the slot 5, the slot 9, ..., and the slot 477. In this case, the second interleaving channel is the interleaving channel 3 in FIG. 4.

It may be understood that, if the data packet carried on the first interleaving channel includes the information to be sent to the first terminal and the information to be sent to the terminal other than the first terminal, the network device further needs to send the data packet to the another terminal in the first time unit occupied by the first interleaving channel. Similarly, if the data packet carried on the second interleaving channel includes the information to be sent to the second terminal and the information to be sent to the terminal other than the second terminal, the network device further needs to send the data packet to the another terminal in the first time unit occupied by the second interleaving channel.

In a possible implementation, the network device includes a p*q storage unit. p is a quantity of rows of the storage unit, and is the same as a quantity of interleaving channels. q may represent a quantity of bits included in each row of the storage unit. The network device stores, by row, a data packet corresponding to an interleaving channel, reads the data packet by column, and sends the data packet to a corresponding terminal.

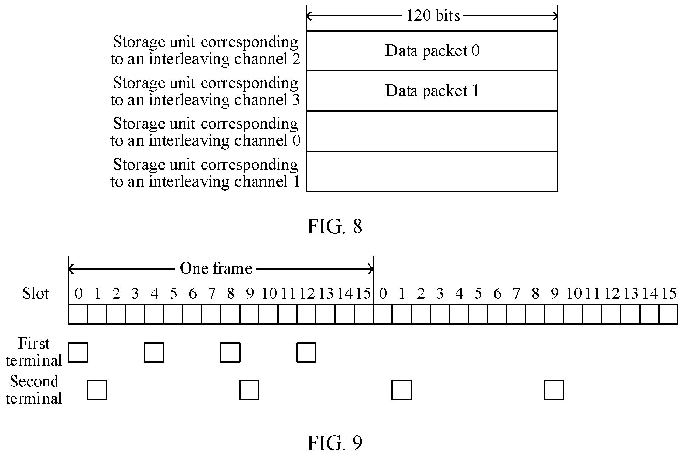

For example, the first interleaving channel is the interleaving channel 2 in FIG. 4, the second interleaving channel is the interleaving channel 3 in FIG. 4, no data is sent on the interleaving channel 0 and the interleaving channel 1 in FIG. 4, and a size of each data packet is 120 bits, to describe a process in which the network device sends the data packets to the first terminal and the second terminal. Because the quantity of interleaving channels is 4, and the size of each data packet is 120 bits, the network device may include a 4* 120 storage unit shown in FIG. 8. After obtaining the data packet 0 sent to the first terminal, the network device stores a data packet 0 in the 1st row of the storage unit, that is, a storage unit corresponding to the interleaving channel 2. After obtaining a data packet 1 sent to the second terminal, the network device stores the data packet 1 in the 2nd row of the storage unit, that is, a storage unit corresponding to the interleaving channel 3. Because no data is sent on the interleaving channel 0 and the interleaving channel 1, storage units corresponding to the interleaving channel 0 and the interleaving channel 1 may be set to special symbols. For example, the storage units are set to 0, the storage units are set to 1, random signals 0 and 1 are written, or a predefined bit sequence is written, to indicate that no data is sent on the interleaving channel 0 and the interleaving channel 1, or the interleaving channel 0 and the interleaving channel 1 are not used. When a data packet needs to be sent, the network device may read and send the data packet by column. For example, the network device first reads the data packet 0, and sends the data packet 0 in a first time unit occupied by the interleaving channel 2. Then, the network device reads the data packet 1, and sends the data packet 1 in a first time unit occupied by the interleaving channel 3.

It may be understood that a change of a channel with time is mainly related to a moving speed of a terminal. A channel corresponding to a terminal with a high moving speed (for example, a device with a high probability of being in a moving state, such as a mobile phone or a smartwatch) also changes rapidly. Therefore, data packets sent to the terminal are sent in short time, so that enough diversity gains can be achieved. For example, for a data packet that is continuously sent and that needs to be sent within 2 ms, time for completing sending is extended to 8 ms, so that enough diversity gains can be achieved. However, a channel corresponding to a terminal with a low moving speed (for example, a device with a high probability of being in a low moving state or a static state, such as an internet of things terminal) also changes slowly, and data packets sent to the terminal need to be sent in a larger time range, so that enough diversity gain can be achieved. For example, for a data packet that is continuously sent and that needs to be sent within 2 ms, time for completing sending is extended to 16 ms, so that enough diversity gain can be achieved.

To enable both the data packet sent to the first terminal and the data packet sent to the second terminal to achieve enough diversity gains, an interval between the first time units occupied by the first interleaving channel and an interval between the first time units occupied by the second interleaving channel may be further configured. The interval between the first time units occupied by the first interleaving channel and the interval between the first time units occupied by the second interleaving channel are defined in a protocol, or configured by the network device. If the interval between the first time units occupied by the first interleaving channel and the interval between the first time units occupied by the second interleaving channel are configured by the network device, the network device may deliver, to the first terminal by using signaling, the interval between the first time units occupied by the first interleaving channel, and deliver, to the second terminal by using signaling, the interval between the first time units occupied by the second interleaving channel.

In a possible design, the interval between the first time units occupied by the second interleaving channel and the interval between the first time units occupied by the first interleaving channel may be the same, or may be different. For example, if a difference between moving speeds of the first terminal and the second terminal is not large, or a difference between time diversity gains required by the first terminal and the second terminal is not large, for example, the first terminal is a mobile phone, and the second terminal is a wearable device, the interval between the first time units occupied by the second interleaving channel is the same as the interval between the first time units occupied by the first interleaving channel. If a difference between moving speeds of the first terminal and the second terminal is large, or a difference between time diversity gains required by the first terminal and the second terminal is large, for example, one of the first terminal and the second terminal is a mobile phone, and the other is an internet of things terminal, the interval between the first time units occupied by the second interleaving channel is different from the interval between the first time units occupied by the first interleaving channel.

It may be understood that, if the first terminal is a mobile phone, and the second terminal is an internet of things terminal, the interval between the first time units occupied by the second interleaving channel is greater than the interval between the first time units occupied by the first interleaving channel. If the first terminal is an internet of things terminal, and the second terminal is a mobile phone, the interval between the first time units occupied by the second interleaving channel is less than the interval between the first time units occupied by the first interleaving channel.

For example, the first terminal is a mobile phone, and the second terminal is an internet of things terminal. A case in which the network device sends data packets to the first terminal and the second terminal may be shown in FIG. 9. In FIG. 9, the network device sends a data packet to the first terminal in a slot 0, a slot 4, a slot 8, and a slot 12 of the 1st frame, and sends a data packet to the second terminal in a slot 1 and a slot 9 of the 1st frame and a slot 1 and a slot 9 of the 2nd frame. The interval between the first time units (that is, the slot 0, the slot 4, the slot 8, and the slot 12 of the 1st frame) occupied by the first interleaving channel is four slots, the interval between the first time units (that is, the slot 1 and the slot 9 of the 1st frame and the slot 1 and the slot 9 of the 2nd frame) occupied by the second interleaving channel is eight slots. In this way, the network device may integrate and send data packets corresponding to terminals (for example, the first terminal and the second terminal) that have different requirements for time diversity gains, to fully utilize resources when the data packets are sent, and improve resource utilization.

Based on the method shown in FIG. 7, the network device may determine N discontinuous first time units corresponding to the first terminal and M discontinuous first time units that correspond to the second terminal and that do not overlap the N discontinuous first time units, send a data packet to the first terminal in the N discontinuous first time units, and send a data packet to the second terminal in the M discontinuous first time units. In the foregoing process, the network device sends a data packet to a terminal in discontinuous time units, so that a probability that a channel for sending the data packet is in a state of deep fading is low, in other words, quality of the channel for sending the data packet is improved. Therefore, according to the method, a time diversity gain can be improved, to reduce a decoding failure rate of the terminal, and reduce impact of a decoding failure on transmission of service data.

The actions of the network device or the terminal in S701 to S704 may be performed by the processor 601 in the communication apparatus 60 shown in FIG. 6 by invoking the application program code stored in the memory 603. This is not limited in embodiments of this application.

Optionally, the network device may determine, through the following S7011 and S7012, the first time unit occupied by the first interleaving channel, and determine, through the following S7013 and S7014, the first time unit occupied by the second interleaving channel. In other words, S701 includes S7011 to S7014.

S7011: The network device determines the identifier of the first interleaving channel.

In this embodiment of this application, an identifier of an interleaving channel indicates the interleaving channel. For example, the identifier of the first interleaving channel indicates the first interleaving channel, and may be an index of the first interleaving channel.

In a possible implementation, the identifier of the first interleaving channel is determined based on at least two of the following information: the identifier of the first terminal, an identifier of a serving cell of the first terminal, a quantity of interleaving channels, or a discontinuous reception (discontinuous reception, DRX) cycle of the first terminal.

In this embodiment of this application, the identifier of the first terminal may indicate the first terminal. For example, the identifier of the first terminal is a radio network temporary identifier (radio network temporary identifier, RNTI) of the first terminal or a temporary mobile subscriber identity (temporary mobile subscriber identity, 5G-s-TMSI) of the first terminal.

In this embodiment of this application, the identifier of the serving cell of the first terminal may indicate the serving cell of the first terminal. The network device may provide a wireless access service for the first terminal through the serving cell.

In this embodiment of this application, the quantity of interleaving channels is a quantity of different interleaving channels included in a period of time (for example, one frame). The interleaving channel shown in FIG. 4 is used as an example. One frame includes four different interleaving channels: the interleaving channel 0, the interleaving channel 1, the interleaving channel 2, and the interleaving channel 3. Therefore, the quantity of interleaving channels is 4.

In this embodiment of this application, the DRX cycle of the first terminal may be a periodicity in which the first terminal receives a message in a discontinuous reception mode. Alternatively, the DRX cycle of the first terminal may be replaced with an extended discontinuous reception (extended discontinuous reception, eDRX) cycle of the first terminal.

Optionally, the network device indicates, to the first terminal, the identifier of the serving cell of the first terminal, and/or the quantity of interleaving channels, and/or the discontinuous reception cycle of the first terminal, so that the first terminal determines the identifier of the first interleaving channel.

In an example, the network device sends first configuration information to the first terminal. Correspondingly, the first terminal receives the first configuration information from the network device. The first configuration information includes at least one type of the following: the identifier of the serving cell of the first terminal, the quantity of interleaving channels, or the discontinuous reception cycle of the first terminal.

Optionally, the first configuration information is broadcast signaling, semi-static configuration signaling, static configuration signaling, or dynamic signaling.

Optionally, the network device sends the first configuration information to the first terminal by using a control signaling part included in a frame.

In a possible implementation, the network device may determine the identifier of the first interleaving channel in at least either of the following manners.

Manner 1: The identifier of the first interleaving channel satisfies a formula: $n_{ich} = mod[UE1_{ID}, N_{ich}]$, or $n_{ich} = mod[UE1_{ID} + \Delta, N_{ich}]$, where $\Delta$ is an offset. Optionally, $\Delta = Cell1_{ID}$, that is, $n_{ich} = mod[UE1_{ID} + Cell1_{ID}, N_{ich}]$.

$n_{ich}$ is the identifier of the first interleaving channel, and $0 \leq n_{ich} < N_{ich}$. $UE1_{ID}$ is the identifier of the first terminal. $N_{ich}$ is the quantity of interleaving channels. $Cell1_{ID}$ is the identifier of the serving cell of the first terminal. $mod$ is a modulo operator.

For example, if the identifier of the first terminal is 121, the quantity of interleaving channels is 4, and the identifier of the serving cell of the first terminal is 3, $n_{ich} = mod[121, 4] = 1$, to be specific, the identifier of the first interleaving channel is 1; or $n_{ich} = mod[121 + 3, 4] = 0$, to be specific, the identifier of the first interleaving channel is 0.

Manner 2: The identifier of the first interleaving channel satisfies a formula: $n_{ich} = mod[floor(UE1_{ID}/T), N_{ich}]$. $floor$ is a rounding down operator. T is the discontinuous reception cycle of the first terminal.

For example, if the identifier of the first terminal is 121, the quantity of interleaving channels is 4, and the discontinuous reception cycle of the first terminal is 10 frames, $n_{ich} = mod[floor(121/10), 4] = 0$, to be specific, the identifier of the first interleaving channel is 0.

S7012: The network device determines, based on the identifier of the first interleaving channel, the first time unit occupied by the first interleaving channel.

In a possible implementation, the first time unit occupied by the first interleaving channel is determined based on the identifier of the first interleaving channel and at least one of the following information: the quantity of interleaving channels, a first offset, an offset of a second time unit, a total quantity of channels, first indication information, information about a start time domain position of the first time unit occupied by the first interleaving channel, or information about an interval between two adjacent first time units occupied by the first interleaving channel.

In this embodiment of this application, the first offset may be defined in a protocol or determined by the network device.

In this embodiment of this application, the offset of the second time unit is an interval between a second time unit in which the first interleaving channel is located and a second time unit of a first time domain position. The first time domain position may be defined in a protocol or determined by the network device. The second time unit is a time domain unit, and may include a period of time. For example, the second time unit includes at least one slot, at least one sub slot, or at least one frame.

In a possible design, the second time unit includes at least two first time units. For example, the second time unit includes one frame, and the first time unit includes one slot.

In this embodiment of this application, a channel is for transmitting a data packet carried on an interleaving channel. For example, a channel (namely, a first channel) corresponding to the first interleaving channel is for transmitting the data packet carried on the first interleaving channel, and a channel (namely, a second channel) corresponding to the second interleaving channel is for transmitting the data packet carried on the second interleaving channel. The total quantity of channels is a total quantity of channels for transmitting a data packet carried on an interleaving channel. Alternatively, the total quantity of channels is a quantity of channels corresponding to an interleaving channel carrying a data packet. It may be understood that the interleaving channel carrying the data packet includes at least the first interleaving channel and the second interleaving channel.

For example, the interleaving channel carrying the data packet includes an interleaving channel 1, an interleaving channel 2, and an interleaving channel 3. If a channel corresponding to the interleaving channel 1 is a channel 1, and a channel corresponding to the interleaving channel 2 and the interleaving channel 3 is a channel 2, the total quantity of channels is 2. If a channel corresponding to the interleaving channel 1 is a channel 1, a channel corresponding to the interleaving channel 2 is a channel 2, and a channel corresponding to the interleaving channel 3 is a channel 3, the total quantity of channels is 3.

In this embodiment of this application, the first indication information indicates whether a data packet is transmitted on the first interleaving channel.

For example, the first indication information includes one bit. If a value of the bit is "0", it indicates that no data packet is transmitted on the first interleaving channel; or if a value of the bit is "1", it indicates that a data packet is transmitted on the first interleaving channel; If a value of the bit is "1", it indicates that no data packet is transmitted on the first interleaving channel; or if a value of the bit is "0", it indicates that a data packet is transmitted on the first interleaving channel.

For another example, the first indication information includes a plurality of bits, and each bit corresponds to one interleaving channel and indicates whether a data packet is transmitted on the interleaving channel. An example in which the first indication information includes four bits, and the quantity of interleaving channels is 4 is used. The $1^{st}$ bit in the four bits indicates whether a data packet is transmitted on an interleaving channel 0, the $2^{nd}$ bit indicates whether a data packet is transmitted on an interleaving channel 1, and the $3^{rd}$ bit indicates whether a data packet is transmitted on an interleaving channel 2, and the $4^{th}$ bit indicates whether a data packet is transmitted on an interleaving channel 3.

In this embodiment of this application, the information about the start time domain position of the first time unit occupied by the first interleaving channel may indicate the start time domain position of the first time unit occupied by the first interleaving channel. For example, the information about the start time domain position of the first time unit occupied by the first interleaving channel includes an identifier of a first time unit of the start time domain position of the first time unit occupied by the first interleaving channel.

In this embodiment of this application, the information about the interval between the two adjacent first time units occupied by the first interleaving channel may indicate the interval between the two adjacent first time units occupied by the first interleaving channel, namely, a periodicity of the first interleaving channel. The interleaving channel shown in FIG. 4 is used as an example. If the first interleaving channel is the interleaving channel 2, the two adjacent first time units are the slot 0 and the slot 4, and the interval between the two adjacent first time units is four slots.

For example, the information about the interval between the two adjacent first time units occupied by the first interleaving channel includes the interval between the two adjacent first time units occupied by the first interleaving channel. Alternatively, the information about the interval between the two adjacent first time units occupied by the first interleaving channel includes an interval coefficient. The network device may determine, based on the interval coefficient and an initial interval, the interval between the two adjacent first time units occupied by the first interleaving channel. The initial interval is defined in a protocol or determined by the network device. An example in which the interval coefficient is 2, and the initial interval is one slot is used. The interval between the two adjacent first time units occupied by the first interleaving channel is 2* 1=2, that is, two slots.

Optionally, the first configuration information further includes at least one of the following: the first offset, the first indication information, the offset of the second time unit, the total quantity of channels, the information about the start time domain position of the first time unit occupied by the first interleaving channel, or the information about the interval between the two adjacent first time units occupied by the first interleaving channel. Alternatively, the network device sends second configuration information to the first terminal. Correspondingly, the first terminal receives the second configuration information from the network device. The second configuration information includes at least one of the following: the first offset, the first indication information, the offset of the second time unit, the total quantity of channels, the information about the start time domain position of the first time unit occupied by the first interleaving channel, or the information about the interval between the two adjacent first time units occupied by the first interleaving channel. In this way, the first terminal may determine, based on the foregoing information and the identifier of the first interleaving channel, the first time unit occupied by the first interleaving channel.

Optionally, the second configuration information is broadcast signaling, semi-static configuration signaling, static configuration signaling, or dynamic signaling.

Optionally, the network device sends the second configuration information to the first terminal by using a control signaling part included in a frame.

In a possible implementation, the network device may determine, in at least any one of the following manners, the first time unit occupied by the first interleaving channel.

Manner 3: The first time unit occupied by the first interleaving channel satisfies a formula: $n_{slot} = mod(n_{ich}, N_{ich}) + nN_{ich}$, $n = 0,1,2, ...$ ; or $n_{slot} = mod(n_{ich} + \Delta_{offset}, N_{ich}) + nN_{ich}$, $n = 0,1,2, ...$ ; or $n_{slot} = N_{slot,start} + mod(n_{ich}, N_{ich}) + nN_{ich}$, $n = 0,1,2, ...$; or $n_{slot} = N_{slot,start} + mod(n_{ich} + \Delta_{offset}, N_{ich}) + nN_{ich}$, $n = 0,1,2, ...$.

$n_{slot}$ is an identifier of the first time unit occupied by the first interleaving channel. $\Delta_{offset}$ is the first offset. $N_{slot,start}$ is the start time domain position of the first time unit occupied by the first interleaving channel. An identifier of a first time unit may indicate the first time unit, for example, an index of the first time unit.

For example, if the identifier of the first interleaving channel is 1, the first offset is 2, the quantity of interleaving channels is 4, and the start time domain position of the first time unit occupied by the first interleaving channel is a slot 1, $n_{slot} = mod(1, 4) + n * 4 = 1,5,9 ...$, to be specific, the identifier of the first time unit occupied by the first interleaving channel is 1, 5, 9, ...; or $n_{slot} = mod(1 + 2, 4) + n * 4 = 3,7,11...$, to be specific, the identifier of the first time unit occupied by the first interleaving channel is 3, 7, 11, ...; or $n_{slot} = 1 + mod(1, 4) + n * 4 = 2,6,10 ...$, to be specific, the identifier of the first time unit occupied by the first interleaving channel is 2, 6, 10, ...; or $n_{slot} = 1 + mod(1 + 2, 4) + n * 4 = 4,8,12 ...$, to be specific, the identifier of the first time unit occupied by the first interleaving channel is 4, 8, 12, ....

Manner 4: The first time unit occupied by the first interleaving channel satisfies a formula: $n_{slot} = mod(n_{ich}, N_{ich}) + nN_{interval}$, $n = 0,1,2, ...$ ; or $n_{slot} = mod(n_{ich} + \Delta_{offset}, N_{ich}) + nN_{interval}$, $n = 0,1,2, ...$ ; or $n_{slot} = N_{slot,start} + mode(n_{ich} + \Delta_{offset}, N_{ich}) + nN_{interval}$, $n = 0,1,2, ...$ ; or $n_{slot} = N_{slot,start} + mode(n_{ich} + \Delta_{offset}, N_{ich}) + nN_{interval}$, $n = 0,1,2, ...$.

$N_{interval}$ is the information about the interval between the two adjacent first time units occupied by the first interleaving channel.

For example, if the identifier of the first interleaving channel is 1, the first offset is 2, the quantity of interleaving channels is 4, the start time domain position of the first time unit occupied by the first interleaving channel is a slot 1, and the interval between the two adjacent first time units occupied by the first interleaving channel is 5, $n_{slot} = mod(1, 4) + n * 5 = 1,6,11 ...$, to be specific, the identifier of the first time unit occupied by the first interleaving channel is 1, 6, 11, ...; or $n_{slot} = mod(1 + 2, 4) + n * 5 = 3,8,13 ...$, to be specific, the identifier of the first time unit occupied by the first interleaving channel is 3, 8, 13, ...; or $n_{slot} = 1 + mod(1, 4) + n * 5 = 2,7,12 ...$, to be specific, the identifier of the first time unit occupied by the first interleaving channel is 2, 7, 12, ...; or $n_{slot} = 1 + mod(1 + 2, 4) + n * 5 = 4,9,14...$, to be specific, the identifier of the first time unit occupied by the first interleaving channel is 4, 9, 14, ....

Manner 5: The first time unit occupied by the first interleaving channel satisfies a formula:

$$n_{slot} = floor\left(\frac{n_{ich} + \Delta_{offset}}{N_{wch}}\right) + n\frac{N_{ich}}{N_{wch}}, n = 0,1,2, ...$$

$N_{wch}$ is the total quantity of channels.

For example, if the identifier of the first interleaving channel is 9, the first offset is 0, the quantity of interleaving channels is 16, and the total quantity of channels is 4, $n_{slot} = floor\left(\frac{9+0}{4}\right) + n\frac{16}{4} = 2,6,10 ...$, to be specific, the identifier of the first time units occupied by the first interleaving channel is 2, 6, 10, ....

It may be understood that if the first indication information indicates that a data packet is transmitted on the first interleaving channel, the network device determines the first time unit occupied by the first interleaving channel. If the first indication information indicates that no data packet is transmitted on the first interleaving channel, the network device does not determine the first time unit occupied by the first interleaving channel, or the network device determines the first time unit occupied by the first interleaving channel, but the network device does not send a data packet to the first terminal.

Optionally, the first terminal may reduce overheads of power consumption by using a DRX mechanism. The DRX mechanism may mean that the first terminal does not perform monitoring on each second time unit, but periodically performs monitoring, and may enter a sleep state in other time. In the DRX mechanism, the network device and the first terminal may determine a specific second time unit in which the first terminal performs monitoring. Subsequently, the network device sends a data packet to the first terminal in the second time unit, and the first terminal receives the data packet in the second time unit.

In a possible design, an identifier of a second time unit monitored by the first terminal satisfies a formula: $(SFN + F_{offset}) \bmod T = UE1_{ID} \bmod T$.

$SFN$ is the identifier of the second time unit monitored by the first terminal. $F_{offset}$ is an offset of the second time unit.

For example, if the offset of the second time unit is 0, the DRX cycle of the first terminal is 10 frames, and the identifier of the first terminal is 121, $(SFN + 0) \bmod 10 = 121 \bmod 10$, to be specific, $SFN$ is 1, 11, 21, .... In other words, the first terminal performs monitoring on the 1st frame, the 11th frame, the 21st frame, .... It may be understood that, if the first time unit that is occupied by the first interleaving channel and that is obtained in the manner 3 or the manner 4 is a slot 2, a slot 7, and a slot 12, the first terminal may perform monitoring in a slot 2, a slot 7, and a slot 12 of the 1st frame, a slot 2, a slot 7, and a slot 12 of the 11th frame, a slot 2, a slot 7, and a slot 12 of the 21st frame, .... Therefore, the network device may send a data packet to the first terminal in the slot 2, the slot 7, and the slot 12 of the 1st frame, the slot 2, the slot 7, and the slot 12 of the 11th frame, the slot 2, the slot 7, and the slot 12 of the 21st, ....

S7013: The network device determines the identifier of the second interleaving channel.

S7014: The network device determines, based on the identifier of the second interleaving channel, the first time unit occupied by the second interleaving channel.

It may be understood that a method for determining, by the network device, the first time unit occupied by the second interleaving channel is similar to the method for determining the first time unit occupied by the first interleaving channel. Therefore, for a specific process of S7013 and S7014, refer to corresponding descriptions in S7011 and S7012. Details are not described again.

It may be understood that a sequence of performing S7011 and S7012 and S7013 and S7014 is not limited in embodiments of this application. S7011 and S7012 may be performed before S7013 and S7014. Alternatively, S7013 and S7014 are performed before S7011 and S7012. Alternatively, S7011 and S7012 and S7013 and S7014 are simultaneously performed.

The actions of the network device or the terminal in S7011 to S7014 may be performed by the processor 601 in the communication apparatus 60 shown in FIG. 6 by invoking the application program code stored in the memory 603. This is not limited in embodiments of this application.

In a possible implementation, in the N first time units (that is, the first time unit occupied by the first interleaving channel), frequencies corresponding to at least two first time units are different; and/or in the M first time units (that is, the first time unit occupied by the second interleaving channel), frequencies corresponding to at least two first time units are different. In other words, the network device may send a data packet in a frequency hopping manner. A frequency response of a channel is affected by a transmission environment. If different frequency parts are separated by more than a coherence bandwidth, quality of channels is independent of each other. Therefore, the network device sends a data packet in the frequency hopping manner, so that a frequency diversity gain can be achieved, to further improve quality of a channel used when the network device sends the data packet.

In this case, the network device and the first terminal may determine at least two first channels, so that the network device sends the data packet to the first terminal in the first time unit occupied by the first interleaving channel and on the at least two first channels, the first terminal receives the data packet from the network device in the first time unit occupied by the first interleaving channel and on the at least two first channels. The network device and the second terminal may determine at least two second channels, so that the network device sends the data packet to the second terminal in the first time unit occupied by the second interleaving channel and on the at least two second channels, and the second terminal receives the data packet from the network device in the first time unit occupied by the second interleaving channel and on the at least two second channels.

Frequencies of the at least two first channels are different. Frequencies of the at least two second channels are different. The at least two first channels and the at least two second channels may be completely the same, or may not be completely the same. That the at least two first channels and the at least two second channels are completely the same may mean that a quantity of the at least two first channels and a quantity of the at least two second channels are the same, and the frequencies of the at least two first channels and the frequencies of the at least two second channels are the same. That the at least two first channels and the at least two second channels are not completely the same may mean that a quantity of the at least two first channels and a quantity of the at least two second channels are different, or a quantity of the at least two first channels and a quantity of the at least two second channels are the same, but a frequency of at least one of the at least two first channels is different from a frequency of a second channel in the at least two second channels.

Optionally, the method in FIG. 7 further includes S705 and S706, and/or S707 and S708.

S705: The network device determines the at least two first channels.

In a possible implementation, a frequency of a first channel is determined based on at least two of the following information: the identifier of the first interleaving channel, the quantity of interleaving channels, an offset of a channel identifier, an identifier of a first time unit corresponding to the first channel, the total quantity of channels, a frequency hopping step, or a frequency hopping range.

In this embodiment of this application, the offset of the channel identifier is defined in a protocol or determined by the network device.

In this embodiment of this application, the frequency hopping step may refer to a frequency difference between channels corresponding to first time units used for two consecutive times of transmission of a data packet or a difference between channel identifiers. For example, the network device sends a data packet 1 to a terminal in a slot 1 and a slot 3, where the slot 1 corresponds to a channel 0, and the slot 3 corresponds to a channel 2. In this case, the frequency hopping step is 2.

In this embodiment of this application, the frequency hopping range may refer to channels on which a data packet carried on an interleaving channel may be sent. For example, a system is configured with a channel 0 to a channel 7, and there are eight channels in total. The data packet carried on the interleaving channel may be sent on the channel 2 to the channel 5. In this case, the frequency hopping range is the channel 2 to the channel 5.

In a possible implementation, the identifier of the first channel satisfies the following formula:

$$n_{wch}(n_{slot}) = mod\left(n_{ich} + \Delta_{FH} + d \times floor\left(\frac{n_{slot}}{N_{ich}/N_{wch}}\right), N_{wch}\right).$$

$n_{wch}(n_{slot})$ is the identifier of the first channel. $\Delta_{FH}$ is the offset of the channel identifier, $d$ is the frequency hopping step or the frequency hopping range.

For example, if the identifier of the first interleaving channel is 9, the offset of the channel identifier is 2, the frequency hopping step is 1, the quantity of interleaving channels is 16, the total quantity of channels is 4, and the identifier of the first time unit corresponding to the first channel is 2, $n_{wch}(2) = mod\left(9 + 2 + 1 \times floor\left(\frac{2}{16/4}\right), 4\right) = 3$, to be specific, the identifier of the first channel is 3.

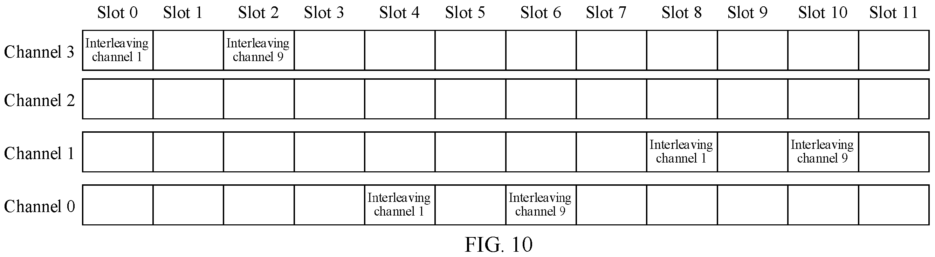

For example, the total quantity of channels is 4, the channels are respectively a channel 0, a channel 1, a channel 2, and a channel 3, the total quantity of interleaving channels is 17, the interleaving channels are respectively an interleaving channel 0 to an interleaving channel 16, the offset of the channel identifier is 2, and the frequency hopping step is 1. If the identifier that is of the first interleaving channel and that is obtained based on S7011 and S7012 is 9, and the identifiers of the first time units occupied by the first interleaving channel are 2, 6, and 10, in other words, the first time units occupied by the first interleaving channel are a slot 2, a slot 6, and a slot 10, the network device may separately determine that an identifier of a first channel corresponding to the slot 2 is $n_{wch}(2) = mod\left(9 + 2 + 1 \times floor\left(\frac{2}{16/4}\right), 4\right) = 3$, an identifier of a first channel corresponding to the slot 6 is $n_{wch}(6) = mod\left(9 + 2 + 1 \times floor\left(\frac{6}{16/4}\right), 4\right) = 0$, and an identifier of a first channel corresponding to the slot 10 is $n_{wch}(10) = mod\left(9 + 2 + 1 \times floor\left(\frac{10}{16/4}\right), 4\right) = 1$. Therefore, a correspondence between a first time unit occupied by the first interleaving channel and a channel may be shown in FIG. 10. In other words, the network device may send data packets to the first terminal on a resource on which the slot 2 and the channel 3 are located, a resource on which the slot 6 and the channel 0 are located, and a resource on which the slot 10 and the channel 1 are located. Correspondingly, the first terminal monitors the resource on which the slot 2 and the channel 3 are located, the resource on which the slot 6 and the channel 0 are located, and the resource on which the slot 10 and the channel 1 are located.

In a possible implementation, if the total quantity of channels is a fixed value, in other words, the total quantity of channels remains unchanged, the identifier of the first channel may satisfy the following formula: $n_{wch}(n_{slot}) = mod(n_{ich} + n_{slot}, Z)$. Z is the total quantity of channels. In this case, the frequency of the first channel is determined based on the identifier of the first interleaving channel and the identifier of the first time unit corresponding to the first channel.

For example, when Z is 4, if the identifier of the first interleaving channel is 1, and the identifiers of the first time units corresponding to the first channel are a slot 0, a slot 3, and a slot 6, the identifier of the first channel corresponding to the slot 0 is $n_{wch}(0) = mod(1 + 0, 4) = 1$, the identifier of the first channel corresponding to the slot 3 is $n_{wch}(3) = mod(1 + 3, 4) = 0$, and the identifier of the first channel corresponding to the slot 6 is $n_{wch}(6) = mod(1 + 6, 4) = 3$.

S706: The first terminal determines at least two first channels.

It may be understood that a process in which the first terminal determines the at least two first channels is similar to a process in which the network device determines the at least two first channels. Therefore, refer to corresponding descriptions in S705. Details are not described herein again.

S707: The network device determines the at least two second channels.

S708: The second terminal determines the at least two second channels.

It may be understood that a process in which the network device and the second terminal determine the at least two second channels is similar to the process in which the network device determines the at least two first channels. Therefore, refer to corresponding descriptions in S705.

For example, a relationship between the at least two second channels determined by the network device and the second terminal and first time units occupied by the second interleaving channel may be shown in FIG. 10. In FIG. 10, the identifier of the second interleaving channel is 1, the first time units occupied by the second interleaving channel are a slot 0, a slot 4, and a slot 8, a second channel corresponding to the slot 0 is a channel 3, a second channel corresponding to the slot 4 is a channel 0, and a second channel corresponding to the slot 8 is a channel 1. In other words, the network device may send data packets to the second terminal on a resource on which the slot 0 and the channel 3 are located, a resource on which the slot 4 and the channel 0 are located, and a resource on which the slot 8 and the channel 1 are located.

Correspondingly, the second terminal monitors the resource on which the slot 0 and the channel 3 are located, the resource on which the slot 4 and the channel 0 are located, and the resource on which the slot 8 and the channel 1 are located.

It may be understood that a sequence of performing S705 to S708 is not limited in embodiments of this application. For example, in this embodiment of this application, S705, S706, S707, and S708 may be sequentially performed. Alternatively, S707, S708, S706, and S705 may be sequentially performed. Alternatively, S705, S707, S706, and S708 may be sequentially performed. It should be understood that there may be a plurality of sequences of performing S705 to S708. Before the network device sends the data packet to the first terminal, and before the first terminal receives the data packet, the at least two first channels are determined. Before the network device sends the data packet to the second terminal, and before the second terminal receives the data packet, the at least two second channels are determined. Examples are not listed one by one herein.

The actions of the network device or the terminal in S705 to S708 may be performed by the processor 601 in the communication apparatus 60 shown in FIG. 6 by invoking the application program code stored in the memory 603. This is not limited in embodiments of this application.

It may be understood that the method shown in FIG. 7 is described by using an example in which the network device sends data packets to the first terminal and the second terminal. If the network device further needs to send a data packet to a third terminal, the network device and the third terminal may further determine a first time unit occupied by a third interleaving channel (which may be replaced with a third transport channel). The network device sends the data packet to the third terminal in the first time unit occupied by the third interleaving channel, and the third terminal receives the data packet from the network device in the first time unit occupied by the third interleaving channel. For details, refer to corresponding descriptions in S701 to S704 and S7011 to S7014.

Optionally, the network device and the third terminal may further determine at least two third channels with different frequencies, so that the network device sends the data packet to the third terminal in the first time unit occupied by the third interleaving channel and on the at least two third channels, and the third terminal receives the data packet from the network device in the first time unit occupied by the third interleaving channel and on the at least two third channels, to achieve a frequency diversity gain, and further improve quality of a channel used when the network device sends the data packet. For details, refer to corresponding descriptions in S705 to S708.

It may be understood that, in the foregoing embodiments, the method and/or the step implemented by the network device may alternatively be implemented by a component (for example, a chip or a circuit) that can be used in the network device. The method and/or the step implemented by the first terminal may alternatively be implemented by a component (for example, a chip or a circuit) that can be used in the first terminal. The method and/or the step implemented by the second terminal may alternatively be implemented by a component (for example, a chip or a circuit) that can be used in the second terminal.

The foregoing mainly describes the solutions provided in embodiments of this application from a perspective of interaction between network elements. Correspondingly, an embodiment of this application further provides a communication apparatus. The communication apparatus may be the network device in the foregoing method embodiments, an apparatus including the network device, or a component that can be used in the network device. Alternatively, the communication apparatus may be the first terminal in the foregoing method embodiments, or an apparatus including the first terminal, or a component that can be used in the first terminal. Alternatively, the communication apparatus may be the second terminal in the foregoing method embodiments, or an apparatus including the second terminal, or a component that can be used in the second terminal.

It may be understood that, to implement the foregoing functions, the network device, the first terminal, the second terminal, or the like includes a corresponding hardware structure and/or software module for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that the foregoing describes interaction between network elements by using only the first terminal, the second terminal, and the network device as examples. Actually, processing performed by the first terminal, the second terminal, or the network device is not limited to being performed by only a single network element. For example, processing performed by the network device may be separately performed by at least one of a CU, a DU, or a remote unit (remote unit, RU).

In embodiments of this application, division into functional modules may be performed on the first terminal, the second terminal, or the network device based on the foregoing method examples. For example, functional modules may be obtained through division corresponding to functions, or two or more functions may be integrated in one processing module. The integrated module may be implemented in a form of hardware, or may be implemented in a form of a software functional module. It may be understood that, in embodiments of this application, module division is an example, and is merely a logical function division. During actual implementation, another division manner may be used.

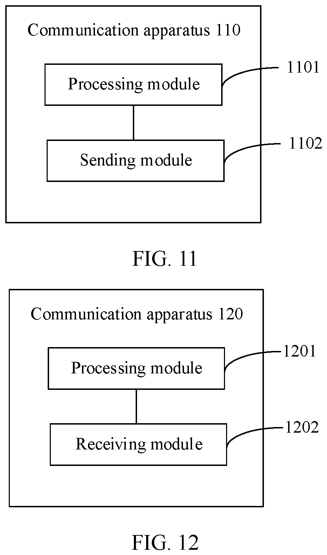

For example, when each functional module is obtained through division in an integrated manner, FIG. 11 is a diagram of a structure of a communication apparatus 110. The communication apparatus 110 includes a processing module 1101 and a sending module 1102. The processing module 1101 may also be referred to as a processing unit, is configured to perform an operation other than receiving and sending operations, and may be, for example, a processing circuit or a processor. The sending module 1102 may also be referred to as a sending unit, and is configured to perform a sending operation, for example, may be a sending circuit, a sending machine, a sender, or a communication interface.

In some embodiments, the communication apparatus 110 may further include a storage module (which is not shown in FIG. 11), configured to store program instructions and data.

For example, the communication apparatus 110 is configured to implement a function of a network device. The communication apparatus 110 is, for example, the network device described in the embodiment shown in FIG. 7.

The processing module 1101 is configured to determine a first time unit occupied by a first transport channel and a first time unit occupied by a second transport channel. The first transport channel and the second transport channel carry data packets, the first transport channel occupies N first time units, at least two of the N first time units are discontinuous in time domain, the second transport channel occupies M first time units, at least two of the M first time units are discontinuous in time domain, N and M are natural numbers greater than or equal to 2, and the N first time units do not overlap the M first time units. For example, the processing module 1101 may be configured to perform S701.

The sending module 1102 is configured to send a data packet to a first terminal in the first time unit occupied by the first transport channel. For example, the sending module 1102 may be configured to perform S704.

The sending module 1102 is further configured to send a data packet to a second terminal in the first time unit occupied by the second transport channel. For example, the sending module 1102 may be configured to perform S704.

In a possible implementation, the processing module 1101 is specifically configured to determine an identifier of the first transport channel. The processing module 1101 is further specifically configured to determine, based on the identifier of the first transport channel, the first time unit occupied by the first transport channel.

In a possible implementation, the identifier of the first transport channel is determined based on at least two of the following information: an identifier of the first terminal, an identifier of a serving cell of the first terminal, a quantity of transport channels, or a discontinuous reception cycle of the first terminal.

In a possible implementation, the determining, based on the identifier of the first transport channel, the first time unit occupied by the first transport channel includes: determining, based on the identifier of the first transport channel and at least one of the following information, the first time unit occupied by the first transport channel: the quantity of transport channels, a first offset, first indication information, an offset of a second time unit, a total quantity of channels, information about a start time domain position of the first time unit occupied by the first transport channel, or information about an interval between two adjacent first time units occupied by the first transport channel, where the first indication information indicates whether a data packet is transmitted on the first transport channel, the second time unit includes at least two first time units, and the total quantity of channels is a quantity of channels corresponding to a transport channel carrying a data packet.

In a possible implementation, a data packet carried on the first transport channel includes information to be sent to the first terminal and information to be sent to a terminal other than the first terminal.

In a possible implementation, frequencies corresponding to at least two of the N first time units are different.

In a possible implementation, the processing module 1101 is further configured to determine at least two channels, where frequencies of the at least two channels are different. The sending module 1102 is specifically configured to send a data packet to the first terminal in the first time unit occupied by the first transport channel and on the at least two channels.

In a possible implementation, a frequency of a first channel is determined based on at least two of the following information: an identifier of the first transport channel, the quantity of transport channels, an offset of a channel identifier, an identifier of a first time unit corresponding to the first channel, a total quantity of channels, a frequency hopping step, or a frequency hopping range. The first channel is any one channel in the at least two channels.

In a possible implementation, an interval between the first time units occupied by the second transport channel is different from an interval between the first time units occupied by the first transport channel.

When the communication apparatus 110 is configured to implement the function of the network device, for other functions that can be implemented by the communication apparatus 110, refer to related descriptions of the embodiment shown in FIG. 7. Details are not described again.

In a simple embodiment, a person skilled in the art may figure out that the communication apparatus 110 may be in the form shown in FIG. 6. For example, the processor 601 in FIG. 6 may invoke the computer-executable instructions stored in the memory 603, to enable the communication apparatus 110 to perform the method in the foregoing method embodiments.

For example, functions/implementation processes of the processing module 1101 and the sending module 1102 in FIG. 11 may be implemented by the processor 601 in FIG. 6 by invoking the computer-executable instructions stored in the memory 603. Alternatively, a function/implementation process of the processing module 1101 in FIG. 11 may be implemented by the processor 601 in FIG. 6 by invoking the computer-executable instructions stored in the memory 603, and a function/implementation process of the sending module 1102 in FIG. 11 may be implemented by the communication interface 604 in FIG. 6.

For example, when each functional module is obtained through division in an integrated manner, FIG. 12 is a diagram of a structure of a communication apparatus 120. The communication apparatus 120 includes a processing module 1201 and a receiving module 1202. The processing module 1201 may also be referred to as a processing unit, is configured to perform an operation other than receiving and sending operations, and may be, for example, a processing circuit or a processor. The receiving module 1202 may also be referred to as a receiving unit, is configured to perform a receiving operation, and may be, for example, a receiving circuit, a receiver machine, a receiver, or a communication interface.

In some embodiments, the communication apparatus 120 may further include a storage module (which is not shown in FIG. 12), configured to store program instructions and data.

For example, the communication apparatus 120 is configured to implement a function of a first terminal. The communication apparatus 120 is, for example, the first terminal described in the embodiment shown in FIG. 7.

The processing module 1201 is configured to determine a first time unit occupied by a transport channel. The transport channel is for carrying a data packet, the transport channel occupies N first time units, at least two of the N first time units are discontinuous in time domain, and N is a natural number greater than or equal to 2. For example, the processing module 1201 may be configured to perform S702.

The receiving module 1202 is configured to receive a data packet from a network device in the first time unit occupied by the transport channel. For example, the receiving module 1202 may be configured to perform S704.

In a possible implementation, the processing module 1201 is specifically configured to determine an identifier of the transport channel. The processing module 1201 is further specifically configured to determine, based on the identifier of the transport channel, the first time unit occupied by the transport channel.

In a possible implementation, the identifier of the transport channel is determined based on at least two of the following information: an identifier of the communication apparatus 120, an identifier of a serving cell of the communication apparatus 120, a quantity of transport channels, or a discontinuous reception cycle of the communication apparatus 120.

In a possible implementation, the determining, based on the identifier of the transport channel, the first time unit occupied by the transport channel includes: determining, based on the identifier of the transport channel and at least one of the following information, the first time unit occupied by the transport channel: the quantity of transport channels, a first offset, first indication information, an offset of a second time unit, a total quantity of channels, information about a start time domain position of the first time unit occupied by the transport channel, or information about an interval between two adjacent first time units occupied by the transport channel, where the first indication information indicates whether a data packet is transmitted on the first transport channel, the second time unit includes at least two first time units, and the total quantity of channels is a quantity of channels corresponding to a transport channel carrying a data packet.

In a possible implementation, a data packet carried on the transport channel includes information to be sent to the communication apparatus 120 and information to be sent to a terminal other than the communication apparatus 120.

In a possible implementation, frequencies corresponding to at least two of the N first time units are different.

In a possible implementation, the processing module 1201 is further configured to determine at least two channels, where frequencies of the at least two channels are different. The receiving module 1202 is specifically configured to receive a data packet from the network device in the first time unit occupied by the transport channel and on the at least two channels.

In a possible implementation, a frequency of a first channel is determined based on at least two of the following information: an identifier of the transport channel, the quantity of transport channels, an offset of a channel identifier, an identifier of a first time unit corresponding to the first channel, a total quantity of channels, a frequency hopping step, or a frequency hopping range. The first channel is any one channel in the at least two channels.

When the communication apparatus 120 is configured to implement the function of the first terminal, for other functions that can be implemented by the communication apparatus 120, refer to related descriptions of the embodiment shown in FIG. 7. Details are not described again.

In a simple embodiment, a person skilled in the art may figure out that the communication apparatus 120 may be in the form shown in FIG. 6. For example, the processor 601 in FIG. 6 may invoke the computer-executable instructions stored in the memory 603, to enable the communication apparatus 120 to perform the method in the foregoing method embodiments.

For example, functions/implementation processes of the processing module 1201 and the receiving module 1202 in FIG. 12 may be implemented by the processor 601 in FIG. 6 by invoking the computer-executable instructions stored in the memory 603. Alternatively, a function/implementation process of the processing module 1201 in FIG. 12 may be implemented by the processor 601 in FIG. 6 by invoking the computer-executable instructions stored in the memory 603, and a function/implementation process of the receiving module 1202 in FIG. 12 may be implemented by the communication interface 604 in FIG. 6.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include the chip and another discrete component. This is not specifically limited in this embodiment of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

Optionally, an embodiment of this application further provides a communication system, including the network device and the first terminal in the foregoing embodiments.

Optionally, the communication system further includes the second terminal in the foregoing embodiments.

The foregoing descriptions about the implementations allow a person skilled in the art to understand that, for the purpose of convenient and brief description, the foregoing functional module divisions are used as examples for illustration. During actual application, the foregoing functions may be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may be one or more physical units, may be located in one place, or may be distributed on different places. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A data packet transmission method, wherein the method comprises:

    determining a first time unit occupied by a first transport channel and a first time unit occupied by a second transport channel, wherein the first transport channel and the second transport channel carry data packets, the first transport channel occupies N first time units, at least two of the N first time units are discontinuous in time domain, the second transport channel occupies M first time units, at least two of the M first time units are discontinuous in time domain, N and M are natural numbers greater than or equal to 2, and the N first time units do not overlap the M first time units;
    sending a data packet to a first terminal in the first time unit occupied by the first transport channel; and
    sending a data packet to a second terminal in the first time unit occupied by the second transport channel.

2. The method according to claim 1, wherein the determining a first time unit occupied by a first transport channel comprises:

    determining an identifier of the first transport channel; and
    determining, based on the identifier of the first transport channel, the first time unit occupied by the first transport channel.

3. The method according to claim 2, wherein the identifier of the first transport channel is determined based on at least two of the following information: an identifier of the first terminal, an identifier of a serving cell of the first terminal, a quantity of transport channels, or a discontinuous reception cycle of the first terminal.

4. The method according to claim 2 or 3, wherein the determining, based on the identifier of the first transport channel, the first time unit occupied by the first transport channel comprises:

    determining, based on the identifier of the first transport channel and at least one of the following information, the first time unit occupied by the first transport channel: the quantity of transport channels, a first offset, first indication information, an offset of a second time unit, a total quantity of channels, information about a start time domain position of the first time unit occupied by the first transport channel, or information about an interval between two adjacent first time units occupied by the first transport channel, wherein
    the first indication information indicates whether a data packet is transmitted on the first transport channel, the second time unit comprises at least two first time units, and the total quantity of channels is a quantity of channels corresponding to a transport channel carrying a data packet.

5. The method according to any one of claims 1 to 4, wherein the data packet carried on the first transport channel comprises information to be sent to the first terminal and information to be sent to a terminal other than the first terminal.

6. The method according to any one of claims 1 to 5, wherein frequencies corresponding to at least two of the N first time units occupied by the first transport channel are different.

7. The method according to claim 6, wherein the method further comprises:

    determining at least two channels, wherein frequencies of the at least two channels are different; and
    the sending a data packet to a first terminal in the first time unit occupied by the first transport channel comprises:

sending the data packet to the first terminal in the first time unit occupied by the first transport channel and on the at least two channels.

8. The method according to claim 7, wherein a frequency of a first channel is determined based on at least two of the following information: the identifier of the first transport channel, the quantity of transport channels, an offset of a channel identifier, an identifier of a first time unit corresponding to the first channel, the total quantity of channels, a frequency hopping step, or a frequency hopping range; and
the first channel is any one of the at least two channels.

9. The method according to any one of claims 1 to 8, wherein an interval between the first time units occupied by the second transport channel is different from an interval between the first time units occupied by the first transport channel.

10. A data packet transmission method, wherein the method is applied to a first terminal, and the method comprises:

determining a first time unit occupied by a transport channel, wherein the transport channel is for carrying a data packet, the transport channel occupies N first time units, at least two of the N first time units are discontinuous in time domain, and N is a natural number greater than or equal to 2; and
receiving a data packet from a network device in the first time unit occupied by the transport channel.

11. The method according to claim 10, wherein the determining a first time unit occupied by a transport channel comprises:

determining an identifier of the transport channel; and
determining, based on the identifier of the transport channel, the first time unit occupied by the transport channel.

12. The method according to claim 11, wherein the identifier of the transport channel is determined based on at least two of the following information: an identifier of the first terminal, an identifier of a serving cell of the first terminal, a quantity of transport channels, or a discontinuous reception cycle of the first terminal.

13. The method according to claim 11 or 12, wherein the determining, based on the identifier of the transport channel, the first time unit occupied by the transport channel comprises:

determining, based on the identifier of the transport channel and at least one of the following information, the first time unit occupied by the transport channel: the quantity of transport channels, a first offset, first indication information, an offset of a second time unit, a total quantity of channels, information about a start time domain position of the first time unit, or information about an interval between two adjacent first time units occupied by the transport channel; and
the first indication information indicates whether a data packet is transmitted on the first transport channel, the second time unit comprises at least two first time units, and the total quantity of channels is a quantity of channels corresponding to a transport channel carrying a data packet.

14. The method according to any one of claims 10 to 13, wherein the data packet carried on the transport channel comprises information to be sent to the first terminal and information to be sent to a terminal other than the first terminal.

15. The method according to any one of claims 10 to 14, wherein frequencies corresponding to at least two of the N first time units are different.

16. The method according to claim 15, wherein the method further comprises:

determining at least two channels, wherein frequencies of the at least two channels are different; and
the receiving a data packet from a network device in the first time unit occupied by the transport channel comprises:
receiving the data packet from the network device in the first time unit occupied by the transport channel and on the at least two channels.

17. The method according to claim 16, wherein a frequency of a first channel is determined based on at least two of the following information: the identifier of the transport channel, the quantity of transport channels, an offset of a channel identifier, an identifier of a first time unit corresponding to the first channel, the total quantity of channels, a frequency hopping step, or a frequency hopping range; and

the first channel is any one of the at least two channels.

18. A communication apparatus, wherein the communication apparatus comprises a processing module and a sending module, wherein

the processing module is configured to determine a first time unit occupied by a first transport channel and a first time unit occupied by a second transport channel, wherein the first transport channel and the second transport channel carry data packets, the first transport channel occupies N first time units, at least two of the N first time units are discontinuous in time domain, the second transport channel occupies M first time units, at least two of the M first time units are discontinuous in time domain, N and M are natural numbers greater than or equal to 2, and the N first time units do not overlap the M first time units;

the sending module is configured to send a data packet to a first terminal in the first time unit occupied by the first transport channel; and

the sending module is further configured to send a data packet to a second terminal in the first time unit occupied by the second transport channel.

19. The communication apparatus according to claim 18, wherein

the processing module is specifically configured to determine an identifier of the first transport channel; and

the processing module is further specifically configured to determine, based on the identifier of the first transport channel, the first time unit occupied by the first transport channel.

20. The communication apparatus according to claim 19, wherein the identifier of the first transport channel is determined based on at least two of the following information: an identifier of the first terminal, an identifier of a serving cell of the first terminal, a quantity of transport channels, or a discontinuous reception cycle of the first terminal.

21. The communication apparatus according to claim 19 or 20, wherein the determining, based on the identifier of the first transport channel, the first time unit occupied by the first transport channel comprises:

determining, based on the identifier of the first transport channel and at least one of the following information, the first time unit occupied by the first transport channel: the quantity of transport channels, a first offset, first indication information, an offset of a second time unit, a total quantity of channels, information about a start time domain position of the first time unit occupied by the first transport channel, or information about an interval between two adjacent first time units occupied by the first transport channel, wherein

the first indication information indicates whether a data packet is transmitted on the first transport channel, the second time unit comprises at least two first time units, and the total quantity of channels is a quantity of channels corresponding to a transport channel carrying a data packet.

22. The communication apparatus according to any one of claims 18 to 21, wherein the data packet carried on the first transport channel comprises information to be sent to the first terminal and information to be sent to a terminal other than the first terminal.

23. The communication apparatus according to any one of claims 18 to 22, wherein frequencies corresponding to at least two of the N first time units occupied by the first transport channel are different.

24. The communication apparatus according to claim 23, wherein

the processing module is further configured to determine at least two channels, wherein frequencies of the at least two channels are different; and

the sending module is specifically configured to send the data packet to the first terminal in the first time unit occupied by the first transport channel and on the at least two channels.

25. The communication apparatus according to claim 24, wherein a frequency of a first channel is determined based on at least two of the following information: the identifier of the first transport channel, the quantity of transport channels, an offset of a channel identifier, an identifier of a first time unit corresponding to the first channel, the total quantity of channels, a frequency hopping step, or a frequency hopping range; and
the first channel is any one of the at least two channels.

26. The communication apparatus according to any one of claims 18 to 25, wherein an interval between the first time units occupied by the second transport channel is different from an interval between the first time units occupied by the first transport channel.

27. A communication apparatus, wherein the communication apparatus comprises a processing module and a receiving module, wherein

the processing module is configured to determine a first time unit occupied by a transport channel, wherein the transport channel is for carrying a data packet, the transport channel occupies N first time units, at least two of the N first time units are discontinuous in time domain, and N is a natural number greater than or equal to 2; and
the receiving module is configured to receive a data packet from a network device in the first time unit occupied by the transport channel.

28. The communication apparatus according to claim 27, wherein

the processing module is specifically configured to determine an identifier of the transport channel; and
the processing module is further specifically configured to determine, based on the identifier of the transport channel, the first time unit occupied by the transport channel.

29. The communication apparatus according to claim 28, wherein the identifier of the transport channel is determined based on at least two of the following information: an identifier of the communication apparatus, an identifier of a serving cell of the communication apparatus, a quantity of transport channels, or a discontinuous reception cycle of the communication apparatus.

30. The communication apparatus according to claim 28 or 29, wherein the determining, based on the identifier of the transport channel, the first time unit occupied by the transport channel comprises:
determining, based on the identifier of the transport channel and at least one of the following information, the first time unit occupied by the transport channel:

the quantity of transport channels, a first offset, first indication information, an offset of a second time unit, a total quantity of channels, information about a start time domain position of the first time unit, or information about an interval between two adjacent first time units occupied by the transport channel; and
the first indication information indicates whether a data packet is transmitted on the first transport channel, the second time unit comprises at least two first time units, and the total quantity of channels is a quantity of channels corresponding to a transport channel carrying a data packet.

31. The communication apparatus according to any one of claims 27 to 30, wherein the data packet carried on the transport channel comprises information to be sent to the communication apparatus and information to be sent to a terminal other than the communication apparatus.

32. The communication apparatus according to any one of claims 27 to 31, wherein frequencies corresponding to at least two of the N first time units are different.

33. The communication apparatus according to claim 32, wherein

the processing module is further configured to determine at least two channels, wherein frequencies of the at least two channels are different; and
the receiving module is specifically configured to receive the data packet from the network device in the first time unit occupied by the transport channel and on the at least two channels.

34. The communication apparatus according to claim 33, wherein a frequency of a first channel is determined based on at least two of the following information: the identifier of the transport channel, the quantity of transport channels, an offset of a channel identifier, an identifier of a first time unit corresponding to the first channel, the total quantity of channels, a frequency hopping step, or a frequency hopping range; and
the first channel is any one of the at least two channels.

35. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 9 or the method according to any one of claims 10 to 17.

36. A chip, comprising a processor, wherein the processor is coupled to a memory, and the memory is configured to store a program or instructions; and when the program or the instructions are executed by the processor, the chip is enabled to perform the method according to any one of claims 1 to 9 or the method according to any one of claims 10 to 17.

37. A computer-readable storage medium, wherein the computer-readable storage medium stores a computer program or instructions; and when the computer program or the instructions are executed, a computer is enabled to perform the method according to any one of claims 1 to 9 or the method according to any one of claims 10 to 17.

FIG. 1

FIG. 2

FIG. 3

| Interleaving channel 1 | 479 |
| Interleaving channel 0 | 478 |
| Interleaving channel 3 | 477 |
| Interleaving channel 2 | 476 |

⋮

| Interleaving channel 1 | 11 |
| Interleaving channel 0 | 10 |
| Interleaving channel 3 | 9 |
| Interleaving channel 2 | 8 |
| Interleaving channel 1 | 7 |
| Interleaving channel 0 | 6 |
| Interleaving channel 3 | 5 |
| Interleaving channel 2 | 4 |
| Interleaving channel 1 | 3 |
| Interleaving channel 0 | 2 |
| Interleaving channel 3 | 1 |
| Interleaving channel 2 | 0 |

Slot

Frame

Shared part

Control signaling part

FIG. 4

FIG. 5

FIG. 6

| Network device | First terminal | Second terminal |
|---|---|---|

S701:
Determine a
first time unit
occupied by a
first
interleaving
channel and a
first time unit
occupied by a
second
interleaving
channel

S7011: Determine an
identifier of the first
interleaving channel

S7012: Determine, based on
the identifier of the first
interleaving channel, the first
time unit occupied by the
first interleaving channel

S7013: Determine an
identifier of the second
interleaving channel

S7014: Determine, based on
the identifier of the second
interleaving channel, the first
time unit occupied by the
second interleaving channel

S702: Determine the first
time unit occupied by the
first interleaving channel

S703: Determine the first
time unit occupied by the
second interleaving channel

S705: Determine at least
two first channels

S706: Determine the at least
two first channels

S707: Determine at least
two second channels

S708: Determine the at least
two second channels

S704: Data packet

S704: Data packet

FIG. 7

| | ←——————— 120 bits ———————→ |
|---|---|
| Storage unit corresponding to an interleaving channel 2 | Data packet 0 |
| Storage unit corresponding to an interleaving channel 3 | Data packet 1 |
| Storage unit corresponding to an interleaving channel 0 | |
| Storage unit corresponding to an interleaving channel 1 | |

FIG. 8

FIG. 9

EP 4 513 982 A1

|  | Slot 0 | Slot 1 | Slot 2 | Slot 3 | Slot 4 | Slot 5 | Slot 6 | Slot 7 | Slot 8 | Slot 9 | Slot 10 | Slot 11 |
|---|---|---|---|---|---|---|---|---|---|---|---|---|
| Channel 3 | Interleaving channel 1 |  | Interleaving channel 9 |  |  |  |  |  |  |  |  |  |
| Channel 2 |  |  |  |  |  |  |  |  |  |  |  |  |
| Channel 1 |  |  |  |  |  |  |  |  | Interleaving channel 1 |  | Interleaving channel 9 |  |
| Channel 0 |  |  |  |  | Interleaving channel 1 |  | Interleaving channel 9 |  |  |  |  |  |

FIG. 10

Communication apparatus 110

Processing module —— 1101

Sending module —— 1102

FIG. 11

Communication apparatus 120

Processing module —— 1201

Receiving module —— 1202

FIG. 12

## INTERNATIONAL SEARCH REPORT

| International application No. |
|---|
| **PCT/CN2023/091337** |

**A. CLASSIFICATION OF SUBJECT MATTER**

H04W52/02(2009.01)i; H04W76/28(2018.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 数据包, 传输, 通道, 非连续, 不连续, 接收, 时间单元, 时隙, 帧, 激活, 重叠, 终端, 标识, 用户设备, 小区, 周期, 频率, 不同, 跳频, channel, discontinuous, reception, DRX, slot, active, time, overlap, many, multiple, UE, cell, ID, duty, period, frequency, different, hopping

**C. DOCUMENTS CONSIDERED TO BE RELEVANT**

| Category* | Citation of document, with indication, where appropriate, of the relevant passages | Relevant to claim No. |
|---|---|---|
| PX | LG ELECTRONICS INC. "Discussion on DTX/DRX Mechanism" *3GPP TSG-RAN2 #120 R2-2212851*, 04 November 2022 (2022-11-04), text, section 2 | 1, 2, 4-11, 13-19, 21-28, 30-37 |
| X | CN 101483891 A (NTT DOCOMO INC.) 15 July 2009 (2009-07-15) description, page 5, line 13 to page 7, line 16, page 8, the fifth-to-last line to page 10, the sixth-to-last line, and figures 3-5 | 1, 2, 4-11, 13-19, 21-28, 30-37 |
| X | CN 101635981 A (DATANG MOBILE COMMUNICATIONS EQUIPMENT CO., LTD.) 27 January 2010 (2010-01-27) description, page 1, line 6 to page 3, line 6, and figure 1C | 1, 2, 4-11, 13-19, 21-28, 30-37 |
| X | WO 2021031202 A1 (HUAWEI TECHNOLOGIES CO., LTD.) 25 February 2021 (2021-02-25) description, page 1, line 20 to page 6, line 5 | 10, 11, 13-17, 27, 28, 30-37 |
| Y | CN 101483891 A (NTT DOCOMO INC.) 15 July 2009 (2009-07-15) description, page 5, line 13 to page 7, line 16, page 8, the fifth-to-last line to page 10, the sixth-to-last line, and figures 3-5 | 3, 12, 20, 29 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2023** | **10 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/091337** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 104813722 B (HUAWEI TECHNOLOGIES CO., LTD.) 07 December 2018 (2018-12-07) description, paragraphs [0006]-[0056] | 3, 12, 20, 29 |
| A | CN 114175786 A (HUAWEI TECHNOLOGIES CO., LTD.) 11 March 2022 (2022-03-11) entire document | 1-37 |

Form PCT/ISA/210 (second sheet) (July 2022)

**INTERNATIONAL SEARCH REPORT**
Information on patent family members

International application No.

**PCT/CN2023/091337**

| Patent document cited in search report | | | Publication date (day/month/year) | Patent family member(s) | | | Publication date (day/month/year) |
|---|---|---|---|---|---|---|---|
| CN | 101483891 | A | 15 July 2009 | CN | 101483891 | B | 05 December 2012 |
| CN | 101635981 | A | 27 January 2010 | CN | 101635981 | B | 23 May 2012 |
| WO | 2021031202 | A1 | 25 February 2021 | None | | | |
| CN | 104813722 | B | 07 December 2018 | None | | | |
| CN | 114175786 | A | 11 March 2022 | None | | | |

Form PCT/ISA/210 (patent family annex) (July 2022)

**REFERENCES CITED IN THE DESCRIPTION**

**Patent documents cited in the description**

- CN 202210504044

- CN 202210970229